# FASCICULE DE BREVET EUROPEEN

(11) **EP 3 641 693 B1**
(45) Date de publication et mention de la délivrance du brevet: **06.09.2023**
(21) Numéro de dépôt: 18730017.3
(22) Date de dépôt: 18.06.2018
(51) Int. Cl.: A61C 8/00

(54) **ELÉMENT DE CICATRISATION DENTAIRE**
ZAHNWUNDHEILELEMENT
DENTAL WOUND HEALING ELEMENT

(30) Priorité: 20.06.2017 FR 1755618; 07.07.2017 FR 1756427; 27.10.2017 FR 1760122; 24.11.2017 FR 1761182
(43) Date de publication de la demande: 29.04.2020
(73) Titulaire: Euroteknika, 74700 Sallanches (FR)
(72) Inventeur: CALVAT, Benjamin, 73400 Ugine (FR); LEGER, Théo, 74700 Domancy (FR); LANCIEUX, Cédric, 74700 Cordon (FR)
(74) Mandataire: Novaimo
(86) Numéro de dépôt international: PCT/EP2018/066135
(87) Numéro de publication internationale: WO 2018/234249

(56) Documents cités:
- WO-A1-2008/120877
- WO-A1-2016/066516
- US-A- 5 810 592
- US-A1- 2012 264 081
- US-A1- 2013 196 290

## Description

La présente invention concerne un ensemble de restauration dentaire.

La restauration dentaire permet de réaliser une dentition artificielle à un patient partiellement ou totalement édenté. Elle repose sur l'intégration d'un ou plusieurs implants dans la structure osseuse, pratiquée par une incision de la gencive afin d'atteindre la structure osseuse et de la percer. Ensuite, un élément de cicatrisation est en général fixé sur un implant et cet ensemble reste intouché jusqu'à solidarisation de l'implant dans la structure osseuse par ostéointégration et cicatrisation de la gencive autour de l'élément de cicatrisation. La restauration dentaire peut être finalisée par la fixation d'un pilier de restauration sur l'implant, sur lequel est fixée la prothèse dentaire. Le pilier et la prothèse dentaire sont personnalisés, adaptés à l'anatomie du patient et à la dent à remplacer, pour atteindre un résultat aussi proche que possible de la dentition naturelle idéale. Pour cela, le volume précis de l'espace à restaurer est en général pris en compte, par une prise d'empreinte, qui permet la fabrication personnalisée de la prothèse dentaire.

Dans l'état de la technique, les méthodes existantes de restauration dentaire se heurtent à tout ou partie des problèmes techniques suivants :
- dans de nombreux procédés existants, une nouvelle intervention sur la gencive est réalisée après sa cicatrisation suite à la pause d'implant, pour réaliser l'empreinte, matérielle ou numérique, de l'espace à restaurer, tout en ayant une vue de l'implant et de la gencive pour prendre en compte précisément l'ensemble de cette géométrie, dans le but de fabriquer un pilier et une prothèse de formes précises : cette approche est naturellement traumatisante ;
- pendant la phase de cicatrisation, un ensemble provisoire est installé en bouche, dont la fonction principale est la cicatrisation de la gencive. Durant cette période transitoire, qui précède la restauration finale avec une prothèse fixée sur l'implant, l'aspect esthétique est souvent négligé.

Le document US5810592 décrit un ensemble de restauration dentaire dans lequel un élément de cicatrisation est destiné à coopérer avec un assemblage supportant une prothèse. De même, le document US2013/0196290 décrit une autre réalisation dans laquelle un support de prothèse est fixé sur un élément de cicatrisation. Ces constructions présentent toutefois des inconvénients.

Ainsi, un objet général de l'invention consiste en une solution de restauration dentaire qui ne comprend pas tout ou partie des inconvénients de l'état de la technique.

Plus précisément, un premier objet de l'invention est une solution de restauration dentaire qui minimise le traumatisme du patient lors du procédé de restauration.

Un second objet de l'invention est une solution de restauration dentaire qui permet d'atteindre un aspect esthétique satisfaisant durant la période transitoire de cicatrisation.

Un troisième objet de l'invention est une solution de restauration dentaire la plus universelle possible, adaptée à tout implant et toute restauration.

A cet effet, l'invention est précisément définie par les revendications.

D'autres avantages et caractéristiques de l'invention apparaîtront mieux à la lecture de la description de modes de réalisation préférés qui vont suivre, en référence aux figures, réalisés à titre d'exemples indicatifs et non limitatifs :
- les figures 1A, 1B et 1C représentent respectivement des vues en perspective d'un ensemble de restauration dentaire comprenant un élément de cicatrisation, un implant et un support amovible d'une prothèse pourvu d'une partie de réception d'une prothèse, selon un mode de réalisation de l'invention ;
- les figures 1D et 1E représentent respectivement des vues en coupe longitudinale des ensembles de restauration dentaire représentés sur les figures 1A à 1C pourvus d'une première variante d'un élément de verrouillage, selon le mode de réalisation de l'invention ;
- la figure 1F représente une vue en perspective du support amovible d'une prothèse, selon le premier mode de réalisation ;
- la figure 1G représente une vue en coupe longitudinale du support amovible d'une prothèse, selon le mode de réalisation de l'invention ;
- la figure 1H représente une vue en perspective de la première variante de l'élément de verrouillage, selon le mode de réalisation
- les figures 1I et 1J représentent respectivement des vues en coupe longitudinale des ensembles de restauration dentaire représentés sur les figures 1A à 1C pourvus d'une deuxième variante de l'élément de verrouillage, selon le mode de réalisation de l'invention
- les figures 2 et 3 représentent respectivement des vues en perspective de dessous et de dessus d'un élément de cicatrisation selon un mode de réalisation de l'invention ;
- les figures 4A à 4C et 5A à 5C représentent respectivement des vues en perspective de dessus et de dessous d'une série d'éléments de cicatrisation selon le mode de réalisation de l'invention ;
- les figures 6A à 6C, 7A à 7C et 8A à 8C représentent respectivement des vues de côté, de dessus et de dessous d'une série d'éléments de cicatrisation selon le mode de réalisation de l'invention ;
- la figure 9 illustre une vue en coupe d'un élément de cicatrisation disposé dans un implant selon le mode de réalisation de l'invention ;
- la figure 10 illustre une vue de côté d'un élément de cicatrisation disposé dans un implant selon le mode de réalisation de l'invention ;
- la figure 11 représente une vue en coupe d'un implant ;
- la figure 12 illustre une vue en coupe d'un élément de cicatrisation fixé sur un implant selon le mode de réalisation de l'invention ;
- les figures 13 et 14 représentent respectivement une vue de côté et une vue en coupe d'une phase intermédiaire d'association d'un implant avec un élément de cicatrisation et avec une vis selon le mode de réalisation de l'invention ;
- la figure 15 illustre une vue en coupe d'un ensemble de cicatrisation comprenant un élément de cicatrisation entouré de la gencive et fixé dans un implant selon le mode de réalisation de l'invention ;
- les figures 16, 17 et 18 représentent deux vues schématiques d'une gencive en coupe au sein de laquelle est fixé un élément de cicatrisation selon le mode de réalisation de l'invention ;
- la figure 19 représente les dents inférieures et supérieures en vue de dessus ;
- la figure 20 représente une vue des dents selon une section justa-gingivale ;
- la figure 21 représente une section horizontale de la dentition au niveau justa-gingival ainsi que les éléments de cicatrisation correspondants retenus selon le mode de réalisation de l'invention ;
- les figures 22 à 24 représentent des vues en coupe par un plan médian vertical selon le mode de réalisation de l'invention ;
- les figures 25 et 26 représentent respectivement des vues en perspective d'un ensemble de restauration dentaire comprenant un élément de prise d'empreinte selon un mode de réalisation de l'invention ;
- la figure 27 représente une vue en coupe longitudinale de l'ensemble de restauration dentaire comprenant un élément de prise d'empreinte selon le mode de réalisation de l'invention ;
- La figure 28 représente une vue en perspective d'une phase intermédiaire d'association d'un élément de cicatrisation sur une embase de pilier selon une variante du mode de réalisation de l'invention ;
- les figures 29A, 29B et 29C représentent respectivement des vues en perspective d'un ensemble de restauration dentaire comprenant un élément de cicatrisation, un implant et un support amovible d'une prothèse selon une variante du mode de réalisation de l'invention ;
- la figure 29D représente une vue en coupe longitudinale des ensembles de restauration dentaire représentés sur les figures 29A à 29C selon la variante mode de réalisation de l'invention ;
- les figures 29E, 29F et 29G représentent respectivement des vues en perspective des ensembles de restauration dentaire représentés sur les figures 29A à 29C avec le support amovible d'une prothèse qui est désassemblé de l'élément de cicatrisation selon la variante du mode de réalisation de l'invention ;
- la figure 29H représente une vue en coupe longitudinale des ensembles de restauration dentaire représentés sur les figures 29F à 29G selon la variante du mode de réalisation de l'invention ;
- les figures 29I, 29J, 29K, 29L et 29M représentent respectivement des vues en perspective du support amovible d'une prothèse comprenant la partie de réception de la prothèse sommitale selon la variante du mode de réalisation de l'invention ;
- la figure 30A représente une vue en perspective d'un ensemble de restauration dentaire comprenant un élément de cicatrisation, un implant et un support amovible d'une prothèse ainsi qu'un élément de verrouillage selon une autre variante du mode de réalisation de l'invention ;
- la figure 30B représente une vue en coupe longitudinale de l'ensemble de restauration dentaire représenté sur la figure 30A selon l'autre variante du mode de réalisation de l'invention ;
- la figure 30C représente une vue en perspective de l'ensemble de restauration dentaire représenté sur la figure 30A avec le support amovible d'une prothèse qui est désassemblé de l'élément de cicatrisation selon l'autre variante du mode de réalisation de l'invention ;
- la figure 30D représente une vue en coupe longitudinale de l'ensemble de restauration dentaire représenté sur la figure 30C selon la variante du mode de réalisation de l'invention ;
- les figures 30E, 30F, 30G et 30H représentent respectivement des vues en perspective du support amovible d'une prothèse comprenant la partie de réception de la prothèse sommitale selon l'autre variante du mode de réalisation de l'invention ;
- les figures 30I et 30J représentent une vue en perspective de l'ensemble de restauration dentaire des figures des 30A à 30D, comprenant l'élément de cicatrisation, l'implant et une variante du support amovible pourvu d'une partie de réception d'une prothèse sommitale ainsi qu'un élément de verrouillage selon l'autre variante du mode de réalisation de l'invention;
- les figures 30K à 30M représentent chacune une vue en coupe longitudinale de l'ensemble de restauration dentaire représenté sur les figures 30I et 30J selon l'autre variante du mode de réalisation de l'invention ;
- les figures 31A, 31B et 31C représentent respectivement des vues en perspective d'un ensemble de restauration dentaire comprenant un élément de cicatrisation, un implant et un support amovible d'une prothèse selon encore une autre variante du mode de réalisation de l'invention ;
- la figure 31D représente une vue en coupe longitudinale des ensembles de restauration dentaire représentés sur les figures 31A à 31C selon la variante mode de réalisation de l'invention ;
- les figures 31E, 31F et 31G représentent respectivement des vues en perspective des ensembles de restauration dentaire représentés sur les figures 31A à 31C avec le support amovible d'une prothèse qui est désassemblé de l'élément de cicatrisation selon la variante du mode de réalisation de l'invention ;
- la figure 31H représente une vue en coupe longitudinale des ensembles de restauration dentaire représentés sur les figures 31F à 31G selon la variante du mode de réalisation de l'invention ;
- les figures 31I, 31J, 31K, 31L et 31M représentent respectivement des vues en perspective du support amovible d'une prothèse comprenant la partie de réception de la prothèse sommitale selon la variante du mode de réalisation de l'invention ;
- la figure 32A représente une vue en perspective d'un ensemble de restauration dentaire comprenant un élément de cicatrisation, un implant et un support amovible d'une prothèse ainsi qu'un élément de verrouillage selon encore une autre variante du mode de réalisation de l'invention ;
- la figure 32B représente une vue en coupe longitudinale de l'ensemble de restauration dentaire représenté sur la figure 30A selon l'autre variante du mode de réalisation de l'invention ;
- la figure 32C représente une vue en perspective de l'ensemble de restauration dentaire représenté sur la figure 32A avec le support amovible d'une prothèse qui est désassemblé de l'élément de cicatrisation selon l'autre variante du mode de réalisation de l'invention ;
- la figure 32D représente une vue en coupe longitudinale de l'ensemble de restauration dentaire représenté sur la figure 32C selon la variante du mode de réalisation de l'invention ;
- les figures 32E, 32F, 32G et 32H représentent respectivement des vues en perspective du support amovible d'une prothèse comprenant la partie de réception de la prothèse sommitale selon l'autre variante du mode de réalisation de l'invention ;
- les figures 33 et 34 représentent respectivement des vues en perspective de dessous et de dessus d'un élément de cicatrisation selon une variante du mode de réalisation de l'invention ;
- les figures 35A à 35C et 36A à 36C représentent respectivement des vues en perspective de dessus et de dessous d'une série d'éléments de cicatrisation selon la variante du mode de réalisation de l'invention ;
- les figures 37A à 37C, 38A à 38C et 39A à 39C représentent respectivement des vues de côté, de dessus et de dessous d'une série d'éléments de cicatrisation selon la variante du mode de réalisation de l'invention ;
- la figure 40 illustre une vue en coupe d'un élément de cicatrisation disposé dans un implant selon la variante du mode de réalisation de l'invention ;
- la figure 41 illustre une vue de côté d'un élément de cicatrisation disposé dans un implant selon la variante du mode de réalisation de l'invention ;
- les figures 42 et 43 représentent respectivement une vue de côté et une vue en coupe d'une phase intermédiaire d'association d'un implant avec un élément de cicatrisation et avec une vis selon la variante du mode de réalisation de l'invention.

Dans la description qui va suivre, les mêmes références seront utilisées pour toutes les variantes de réalisations pour désigner les mêmes composants, voire leurs équivalents, afin de ne pas alourdir le texte et de faciliter sa lecture.

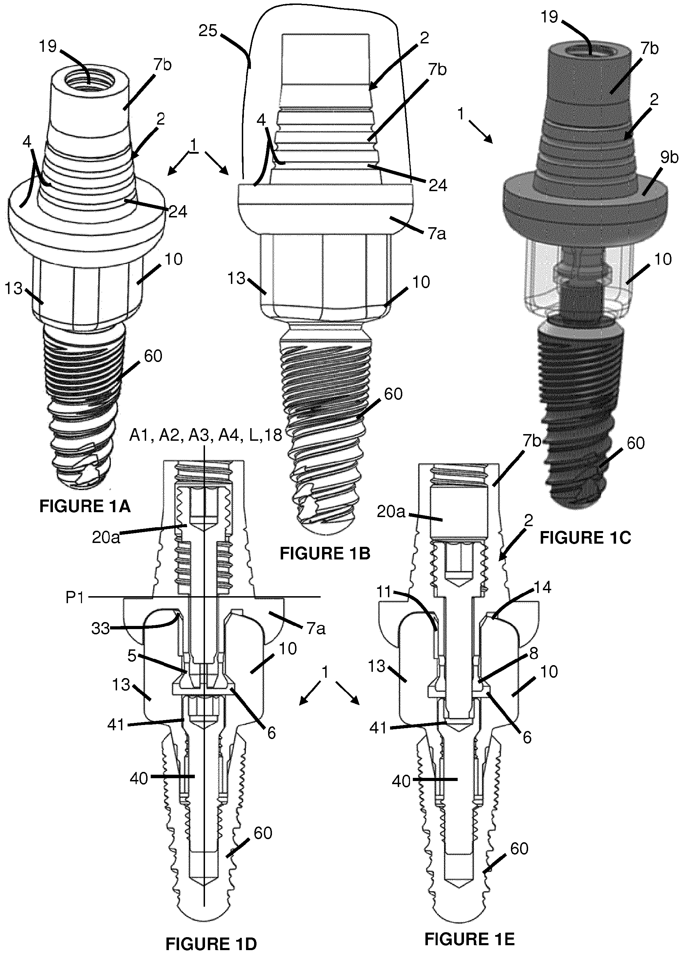

Dans le mode de réalisation représenté sur la figure 1A à 1J, un ensemble de restauration dentaire 1 comprend un élément de cicatrisation 10, apte à une connexion avec un implant dentaire 60 (qui sera appelé plus simplement implant 60, et un support 2 amovible d'une prothèse, notamment d'une prothèse sommitale 25, que nous appellerons aussi parfois simplement « support ». Un tel ensemble de restauration dentaire participe à la mise en oeuvre d'un procédé de restauration dentaire qui peut comprend deux phases :
- une première phase dite de cicatrisation durant laquelle un ou plusieurs implant(s) sont intégrés dans la structure osseuse du patient par ostéointégration, et durant laquelle l'élément de cicatrisation particulier est utilisé, comme cela va être détaillé par la suite. Durant cette première phase, une prothèse sommitale 25 temporaire, voire définitive, peut être fixée sur le ou les éléments de cicatrisation par l'intermédiaire du support amovible, et ce notamment durant le temps nécessaire à la cicatrisation, et
- une deuxième phase de restauration en tant que telle, durant laquelle une prothèse sommitale définitive est mise en place sur le ou les implants par l'intermédiaire d'un pilier de restauration ou bien directement sur le ou les éléments de cicatrisation par l'intermédiaire du support amovible.

En remarque, il existe de nombreuses situations pour lesquelles il est déconseillé de positionner une prothèse pendant la cicatrisation, soit pendant la première phase susmentionnée. En effet, une telle prothèse apporte un avantage au niveau esthétique. Toutefois, elle présente un risque d'induire des efforts sur un implant en cours de cicatrisation, ce qui peut être néfaste. C'est pourquoi, l'élément de cicatrisation doit nécessairement être adapté pour une utilisation seul en bouche, pendant la première phase, mais aussi être adapté pour les situations pour lesquelles l'ajout d'une prothèse est préférée. Ainsi, l'élément de cicatrisation peut occuper une première configuration dans laquelle il reçoit la fixation amovible d'un support de prothèse, et une deuxième configuration dans laquelle il est fixé seul sur un implant, sans ajout d'une prothèse, ni d'aucun autre composant.

L'implant 60 comprend une enveloppe globale de forme cylindrique ou tronconique et un axe longitudinal L formant un axe de révolution de cette enveloppe globale. L'implant 60 comprend un moyen d'ancrage dans la structure osseuse du patient. Ce moyen d'ancrage peut être un ensemble de filets disposés sur un pourtour extérieur de l'implant et comprenant un pas de filetage variable. Une partie inférieure de l'implant, c'est-à-dire une partie de l'implant au fond de la structure osseuse, peut comprendre des filets plus larges tandis qu'une partie supérieure de l'implant, c'est-à-dire une partie de l'implant du coté de la surface de la structure osseuse, peut comprendre des filets plus fins. L'implant comprend une ouverture du côté de son extrémité supérieure et suivant l'axe longitudinal L à l'intérieur de laquelle se trouve un dispositif de connexion avec un élément de cicatrisation 10. Le dispositif de connexion comprend une ouverture filetée 21, une ouverture de section hexagonale 22 dans le prolongement de l'ouverture filetée et une portée conique débouchant sur une face supérieure de l'implant. L'ouverture filetée 21, l'ouverture de section hexagonale 22 et la portée conique sont adjacentes, coaxiales à l'axe longitudinal L et agencées de sorte que l'ouverture filetée 21 est du coté inférieur de l'implant 60, la portée conique est du coté supérieur de l'implant 60 et l'ouverture de section hexagonale 22 est entre l'ouverture filetée 21 et la portée conique.

L'élément de cicatrisation 10, parfois appelé « capuchon », est une pièce monobloc, c'est-à-dire qu'il est constitué d'une seule pièce et de préférence à partir d'un unique matériau. Il a pour fonction de venir se loger au sein de la gencive incisée, après fixation de l'implant, par fixation directe ou indirecte, de préférence amovible, à l'implant.

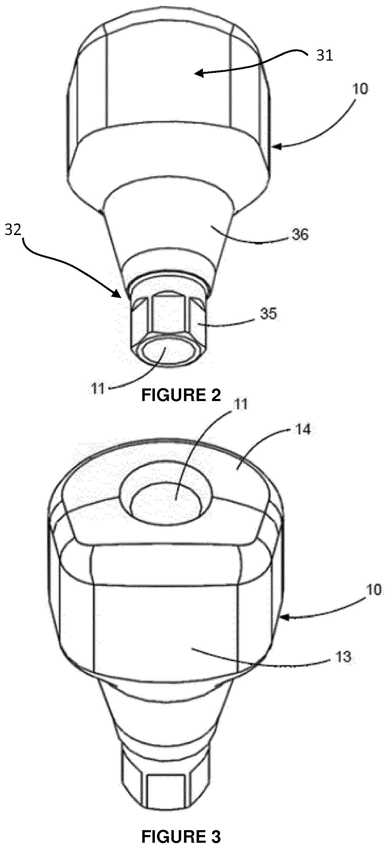

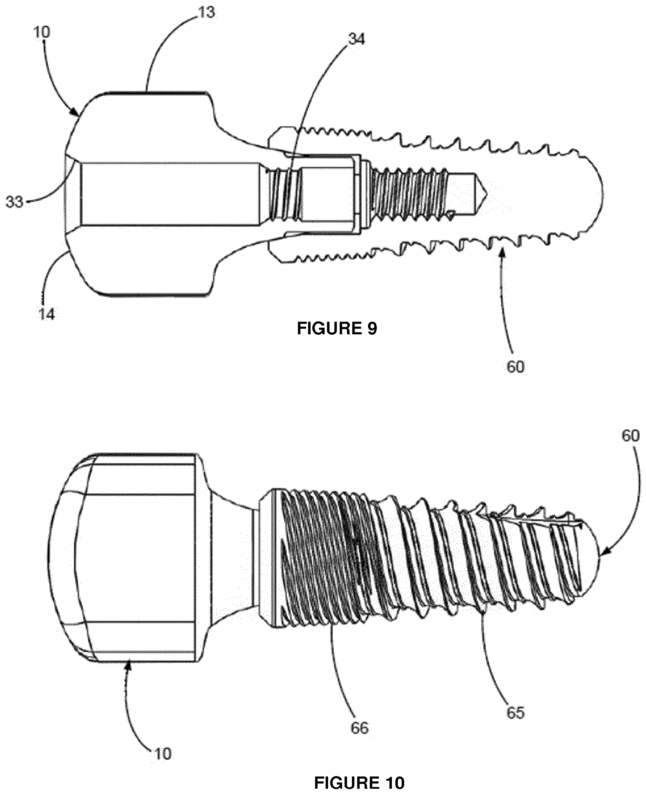

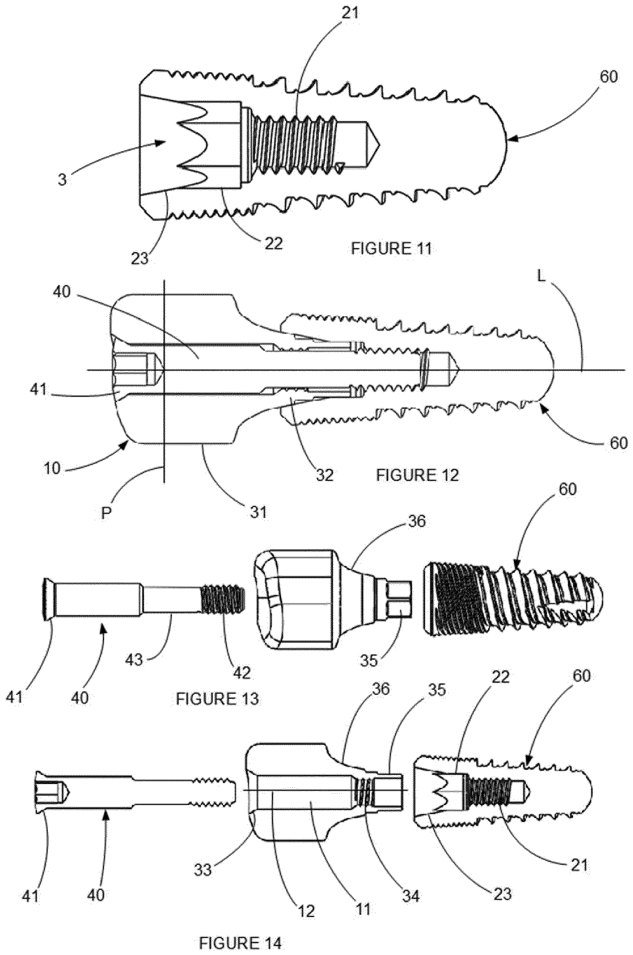

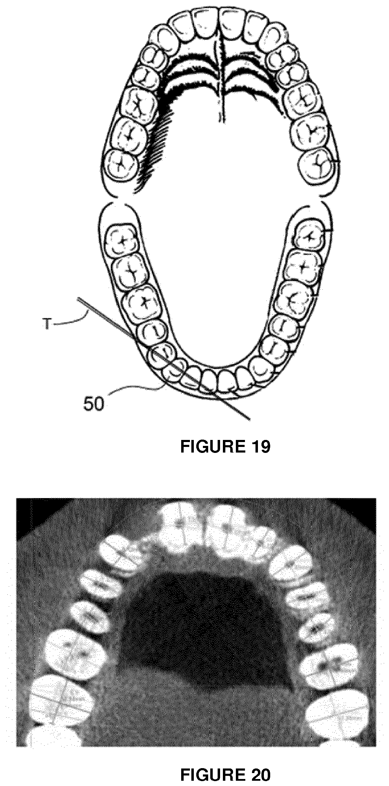

Comme illustré sur les figures 2 à 24, l'élément de cicatrisation 10 comprend une partie supérieure 31 destinée à être en contact avec la gencive et une partie inférieure 32 destinée à être introduite dans l'ouverture de l'implant pour coopérer avec le dispositif de connexion. L'élément de cicatrisation comprend une ouverture traversante 11 orientée selon un axe et destinée à recevoir une vis 40 vissée dans l'ouverture filetée 21 de l'implant 60, comme cela est représenté par les figures 13 et 14. Autrement dit, l'élément de cicatrisation 10 comprend notamment une ouverture dans une surface opposée à une surface terminale 14, qui sera précisée par la suite. L'élément de cicatrisation 10 est donc destiné à être fixé directement sur l'implant par l'intermédiaire de la vis 40. Lorsque l'élément de cicatrisation est fixé sur l'implant, l'axe de l'ouverture traversante 11 est confondu avec l'axe longitudinal L de l'implant. Cet assemblage est notamment illustré par les figures 12 et 19. L'ouverture 11 traversante est de forme globalement cylindrique et comprend, à une extrémité du coté de la partie supérieure, une portée conique 33. Cette portée conique 33 est destinée à coopérer avec une portée conique d'une tête de vis 41 de forme complémentaire de manière à former une interface étanche. La portée conique 33 et la tête de vis 41 ont donc une fonction de cône d'étanchéité.

L'élément de cicatrisation 10 comprend au moins un filet 34 disposé au niveau de l'ouverture 11 et apte à coopérer avec une partie filetée de la vis 40 pour empêcher une dissociation entre la vis 40 et l'élément de cicatrisation 10 par un seul mouvement de translation. La vis 40 comprend une partie cylindrique non filetée entre la partie filetée et la tête de vis 41. La partie filetée est destinée à collaborer avec l'ouverture filetée 21 de l'implant pour bloquer en position l'élément de cicatrisation. La partie cylindrique de la vis est destinée à être positionnée le long de l'ouverture 11 de l'élément de cicatrisation. Lors de l'assemblage de la vis 40 avec l'élément de cicatrisation 10, la vis doit être vissée au travers de l'au moins un filet 34. La vis est conçue de sorte que, lorsque la tête de vis 41 est en appui sur la portée conique 33 de l'élément de cicatrisation, l'au moins un filet 34 est en vis-à-vis de la partie cylindrique de la vis. Avantageusement, la partie filetée de la vis 40 ne peut pas être simultanément en prise avec l'au moins un filet 34 et l'ouverture filetée 21 de l'implant. Un tel assemblage de la vis, également dénommé « imperdable » permet d'éviter de dissocier par erreur un élément de cicatrisation de la vis qui lui est associée, par exemple cet assemblage permet d'éviter de faire tomber la vis en manipulant l'élément de cicatrisation. L'élément de cicatrisation et la vis peuvent ainsi être livrés pré-assemblés ce qui réduit la quantité de manipulations pour le dentiste. En outre, l'au moins un filet 34 constitue également un point d'accroche de l'élément de cicatrisation qui pourra être utilisé lors d'un retrait ultérieur de l'élément de cicatrisation. En effet, le dentiste peut alors dévisser partiellement la vis de manière à dissocier sa partie filetée de l'ouverture filetée 21 de l'implant tout en conservant une prise de la partie filetée sur l'au moins un filet 34 de l'élément de cicatrisation. Le dentiste peut alors facilement saisir la tête de vis et tirer dessus pour démonter l'élément de cicatrisation sans transmettre d'effort à l'implant et sans gêne pour le patient.

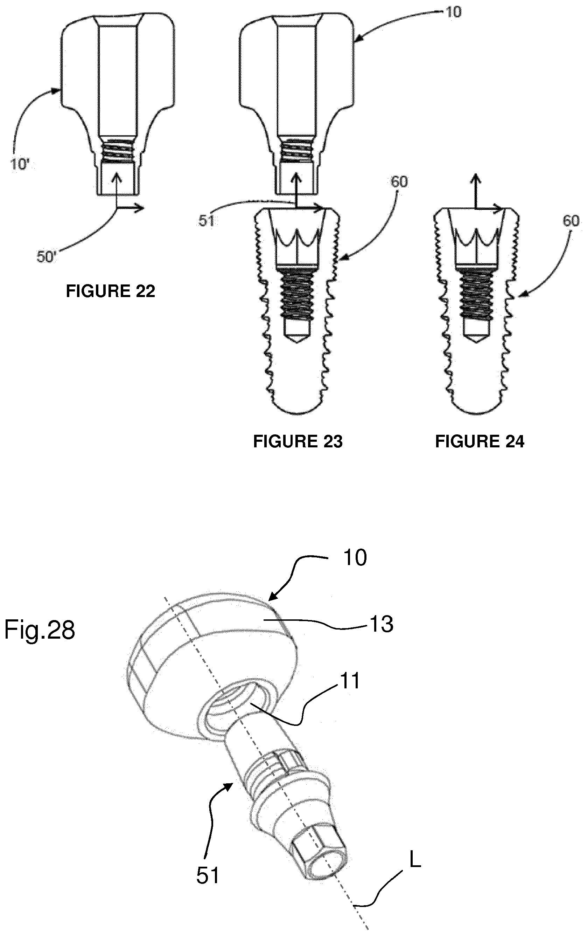

Ainsi que nous l'avons évoqué précédemment, dans une alternative à la fixation directe de l'élément de cicatrisation 10 à l'implant 60 décrite auparavant, ce dernier peut être fixé de manière indirecte à cet implant 60. En effet, selon un procédé décrit dans le document FR3027792, cet élément de cicatrisation 10 peut être fixé de manière amovible à une embase de pilier 51 qui est connectée à l'implant 60, comme représenté par la figure 28. Dans cette configuration, l'implant 60 est solidarisé à la partie osseuse, l'embase de pilier est fixée sur l'implant 60, de sorte que sa collerette se trouve positionnée au niveau de la frontière entre la partie osseuse et la gencive. L'élément de cicatrisation recouvre l'embase de pilier jusqu'à la collerette, de sorte que la gencive est presque exclusivement en contact avec l'élément de cicatrisation 10. En remarque, le support amovible de réception d'une prothèse est de préférence distinct de l'élément de cicatrisation, et éventuellement aussi de l'embase de pilier qu'il contient dans le cas de l'alternative décrite ci-dessus. Notamment, le support amovible ne participe pas à une fonction de prise d'empreinte, numérique ou pas. C'est le seul élément de cicatrisation (éventuellement sur une embase de pilier), après retrait ou en l'absence de support amovible de prothèse, qui est utilisé pour la prise d'empreinte, notamment la prise d'empreinte numérique par scanner.

Dans le mode de réalisation décrit précédemment dans lequel l'élément de cicatrisation 10 est monobloc, il comprend à son extrémité inférieure et sur un pourtour extérieur une portion de section hexagonale 35, apte à coopérer avec l'ouverture de section hexagonale 22 de l'implant. L'interface ainsi formée permet de garantir une fixation de l'élément de cicatrisation 10 à orientation unique, sans rotation de l'élément de cicatrisation autour de l'implant 60. La portion de section hexagonale 35 et l'ouverture de section hexagonale 22 sont des éléments anti-rotationnels qui pourraient être remplacés par tous autres éléments anti-rotationnels équivalents. En outre, l'élément de cicatrisation comprend également sur le pourtour extérieur de sa partie inférieure 32 une portion tronconique 36 ou sensiblement tronconique, apte à coopérer avec la portée conique 23 de l'implant pour former une interface étanche entre l'implant et l'élément de cicatrisation. La portion tronconique 36 comprend une frontière entre la partie inférieure 32 et la partie supérieure 31 de l'élément de cicatrisation. La portée conique 23 et la portion tronconique 36 ont une fonction de cône d'étanchéité et également une fonction de positionnement unique de l'élément de cicatrisation par rapport à l'implant. En effet l'assemblage de la portée conique 23 avec la portion tronconique 36 constitue une liaison pivot d'axe confondu avec l'axe longitudinal L. En particulier, après serrage de la vis 40, une telle liaison réduit à zéro tout jeu en translation entre l'élément de cicatrisation et l'implant selon l'axe longitudinal L ou tout axe perpendiculaire à l'axe longitudinal L. De plus, comme une rotation de l'élément de cicatrisation par rapport à l'implant est impossible grâce à l'interface constituée par la portion de section hexagonale 35 et l'ouverture de section hexagonale 22, la liaison entre l'élément de cicatrisation et l'implant est une liaison particulièrement rigide.

La partie supérieure de l'élément de cicatrisation comprend une face terminale 14 au travers de laquelle débouche la portée conique 33 de l'ouverture 11 et une surface latérale 13 autour de laquelle la gencive est destinée à se cicatriser. La portée conique est orientée vers l'intérieur de l'élément de cicatrisation de sorte que la tête de vis 41 est noyée dans l'élément de cicatrisation. Ainsi la tête de vis 41 ne dépasse pas de la face terminale 14. Ainsi, la tête de vis 41 est agencée de sorte à venir fermer l'ouverture 11 de la face terminale, tout en prolongeant sa surface pour en faire une surface finale continue, comme cela est particulièrement visible sur la figure 12.

Les implants existants peuvent avoir des formes différentes et notamment des dispositifs de connexion différents. Il peut exister autant d'éléments de cicatrisation différents que de dispositifs de connexion différents, afin de pouvoir disposer, pour chaque implant existant, d'un élément de cicatrisation doté d'un dispositif de connexion qui lui est adapté.

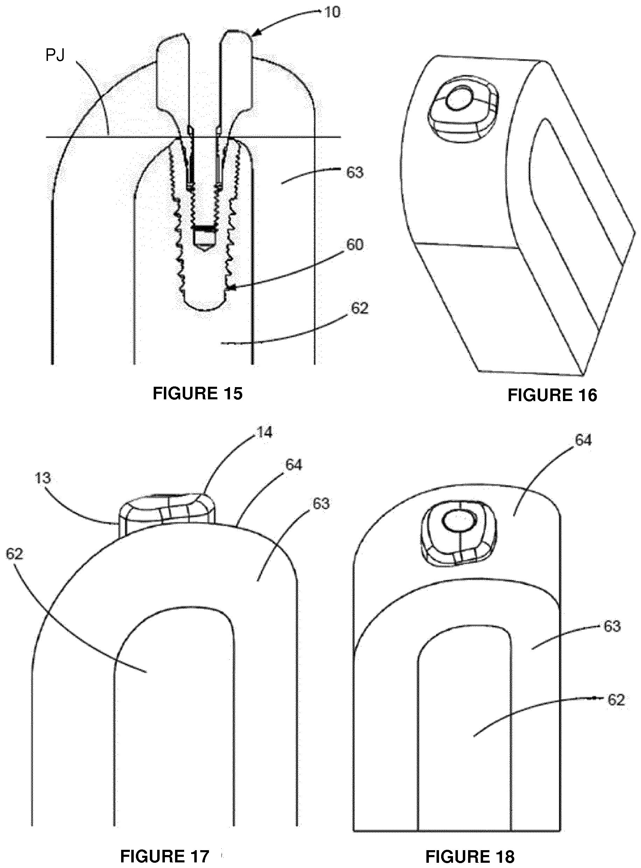

L'élément de cicatrisation 10 a pour fonction de venir se loger au sein de la gencive incisée, après fixation d'un implant. La configuration finale est représentée sur la figure 18. Dans cette configuration, l'implant 60 est solidarisé à la structure osseuse 62 et émerge faiblement de la partie osseuse dans la gencive 63. L'élément de cicatrisation 10 est fixé à l'implant 60 de sorte que la gencive est presque exclusivement en contact avec l'élément de cicatrisation 10. L'élément de cicatrisation participe, de préférence temporairement, à un procédé de restauration, permettant la cicatrisation et la fabrication sans heurt de la prothèse sommitale définitive.

La gencive se cicatrise donc autour de la surface latérale 13 de l'élément de cicatrisation 10. Pour cela, cette surface latérale 13 est choisie pour correspondre au mieux au milieu buccal du patient. La surface terminale 14 de l'élément de cicatrisation est destinée à rester visible au-dessus de la surface gingivale 64 de la gencive, puisque la gencive 63 reste intégralement en contact avec la surface latérale 13 de l'élément de cicatrisation. En remarque, la partie haute de la surface latérale 13 et la surface terminale 14 forment donc une surface émergente de l'élément de cicatrisation. Cette surface émergente est notamment illustrée par les figures 16 à 18. Pour cela, des éléments de cicatrisation de hauteur différente peuvent être prévus pour s'adapter à différentes configurations de la géométrie buccale. A titre d'exemples de réalisation, trois hauteurs différentes standard permettent une bonne adaptation à toutes les situations. Cette hauteur est avantageusement comprise entre 3 et 10 mm. Une coloration de la vis peut permettre d'identifier rapidement la hauteur de l'élément de cicatrisation. Par exemple, une vis de couleur bleue peut être associée à l'élément de cicatrisation de petite taille. Une vis de couleur verte peut être associée à l'élément de cicatrisation de taille intermédiaire. Une vis de couleur rouge peut être associée à l'élément de cicatrisation de grande taille. Ainsi, le dialogue entre dentistes et prothésistes peut être simplifié.

Selon le mode de réalisation de l'invention, la forme de l'élément de cicatrisation est spécifiquement choisie pour favoriser la cicatrisation de la gencive, selon une forme anatomique correspondant au mieux à la dent à remplacer et par conséquent aussi à la future prothèse sommitale destinée à occuper cet espace buccal. Cette forme est notamment caractérisée par la section plane de sa surface latérale 13, cette section étant une section transverse par un plan perpendiculaire P à la surface latérale 13, représenté sur la figure 12, et sensiblement parallèle à la surface terminale 14. En remarque, cette section est sensiblement reproduite par la forme de la surface terminale 14, ou plus précisément par la projection de cette surface terminale 14 sur un tel plan perpendiculaire, c'est-à-dire sensiblement parallèle à la surface gingivale 64.

Pour comprendre l'approche retenue, la figure 19 illustre une vue de dessus des dents supérieures et inférieures et la figure 20 illustre une vue en coupe au niveau du plan justogingival PJ d'une dentition, représenté sur la figure 15, au niveau de la racine des émergences des dents. Ces figures montrent que les dents possèdent des sections de formes différentes, que l'on peut simplifier par des formes rectangulaires et/ou carrées et/ou triangulaires, ou plus précisément trapézoïdales.

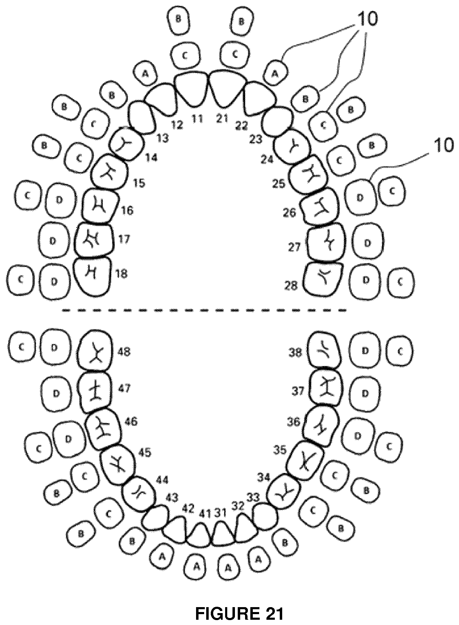

Selon le mode de réalisation choisi, une série d'éléments de cicatrisation 10 de formes différentes va permettre de reproduire au mieux ces différentes formes. La figure 21 représente ainsi une vue de dessus des sections de toutes les dents et une vue de dessus d'éléments de cicatrisation 10 associés à chaque dent. Les formes des différentes séries de dents, numérotées de 11 à 18, de 21 à 28, de 31 à 38 et de 41 à 48 sur cette figure, ces numéros ne devant pas être confondus avec les références numériques utilisées par ailleurs sur les autres figures pour désigner les caractéristiques de l'invention, sont toutes approchées par l'intermédiaire de quatre éléments de cicatrisation 10 différents, référencés A à D. Pour certaines dents, voire toutes les dents, plusieurs éléments de cicatrisation, parmi les éléments de cicatrisation A à D, apparaissent adaptés.

Dans l'exemple de réalisation choisi et illustré par la figure 21, les éléments de cicatrisation A sont adaptés pour traiter la restauration des incisives latérales supérieures et toutes les incisives inférieures. Les éléments de cicatrisation B sont adaptés pour la restauration des canines et des prémolaires, les éléments de cicatrisation C sont adaptés pour la restauration des molaires intermédiaires puis les éléments de cicatrisation D sont adaptés pour la restauration des molaires les plus grosses. En variante, la série d'éléments de cicatrisation 10 pourrait comprendre un tout autre nombre d'éléments de cicatrisation différents, par exemple trois ou cinq éléments de cicatrisation différents.

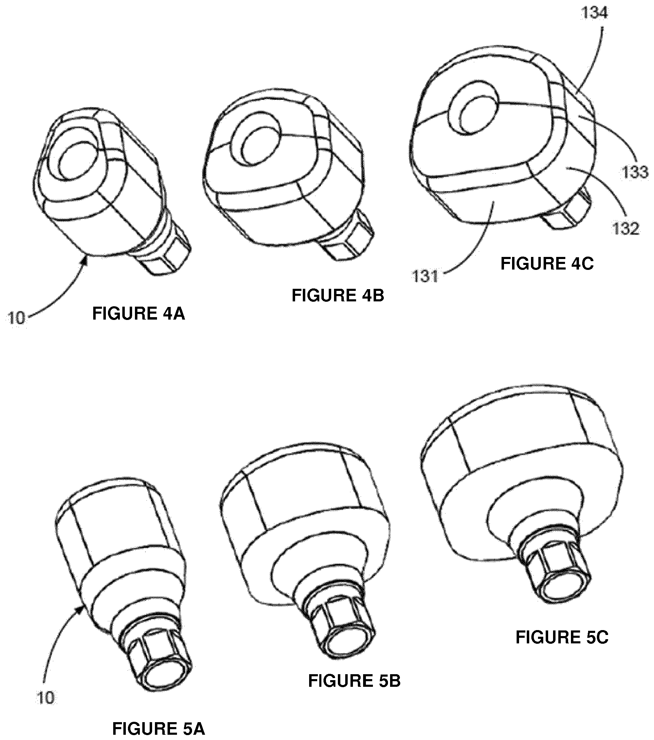

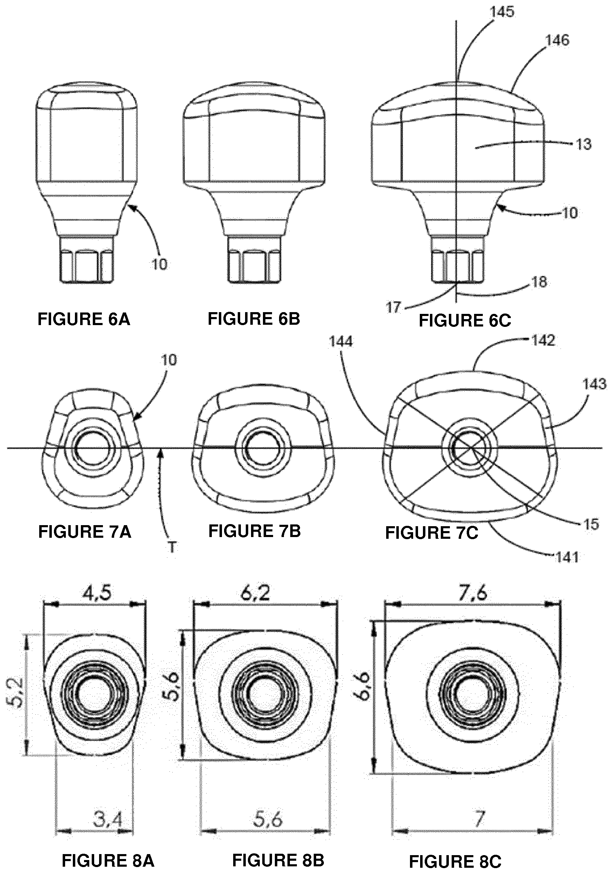

Ces éléments de cicatrisation vont maintenant être décrits plus en détail en considérant une série de trois éléments de cicatrisation A, B et C. L'élément de cicatrisation A est particulièrement illustré par les figures 4A à 8A, l'élément de cicatrisation B par les figures 4b à 8b et l'élément de cicatrisation C par les figures 4c à 8c. Pour ne pas alourdir les figures, les références numériques ne sont pas reproduites sur tous les éléments de cicatrisation de ces figures, toutefois, tous ces éléments de cicatrisation possèdent les mêmes caractéristiques, qui vont être décrites.

Comme cela ressort des figures 4A à 7C, les surfaces terminales 14 de ces éléments de cicatrisation 10 (A à C), destinées à un positionnement au-dessus de l'émergence gingivale, sont sensiblement planes et destinées à un positionnement parallèle à un plan horizontal (parallèle au plan justogingival PJ, entre 1 et 2 mm inclus au-dessus de ce plan) correspondant au plan de coupe de la figure 19. Elles sont toutefois légèrement bombées, présentant une partie centrale 145, plus particulièrement visible sur les figures 6A à 6C, destinées à s'élever plus au-delà de la gencive que ses parties périphériques 146.

La section transverse de l'élément de cicatrisation, par un plan P perpendiculaire à sa surface latérale 13, comme explicité précédemment, qui donne la forme finale à la gencive après cicatrisation, est sensiblement reproduite par la surface terminale 14 de l'élément de cicatrisation (notamment sa projection sur un plan P), qui vient dans son prolongement. Les sections de tous les éléments de cicatrisation présentent toutes une forme sensiblement trapézoïdale. Elles comprennent un grand côté 141, qui sera disposé du côté de l'extérieur de la bouche (côté vestibulaire), un petit côté 142 opposé parallèle, qui sera disposé du côté de l'intérieur de la bouche (côté lingual), reliés par deux côtés 143, 144. Le croisement des diagonales du trapèze permet de définir un centre 15. De préférence, ce centre 15 ainsi défini se trouve sur l'axe de l'ouverture traversante 11 de l'élément de cicatrisation. De plus, en considérant de même le centre 17 de l'ouverture 11 au niveau de l'extrémité inférieure de l'élément de cicatrisation dans l'alternative d'un ensemble de restauration en plusieurs éléments distincts, sensiblement circulaire, il est possible de définir un axe 18 central de l'élément de cicatrisation, passant par les deux points centraux 15, 17. Cet axe 18 de l'élément de cicatrisation 10 est perpendiculaire à la surface terminale 14. De préférence, l'axe 18 de l'élément de cicatrisation, qu'il soit monobloc ou non, est confondu avec l'axe de l'ouverture traversante 11 et l'axe longitudinal L de l'implant.

Les trois types d'éléments de cicatrisation 10, A, B et C, diffèrent donc notamment par la forme trapézoïdale de la section transverse de leurs surfaces latérales 13. En fonction de l'élément de cicatrisation considéré, la forme trapézoïdale peut se rapprocher d'une forme triangulaire ou d'une forme rectangulaire, voire d'une forme carrée. A titre d'exemples de réalisation, les figures 8A à 8C donnent des ordres de grandeur des dimensions de ces éléments de cicatrisation, en millimètres.

Naturellement, cette forme sensiblement trapézoïdale retenue présente des angles arrondis et des côtés courbés, pour garantir de ne pas heurter la gencive. De plus, la surface terminale 14 de chaque élément de cicatrisation présente, à l'exception de l'ouverture 11, une surface continue, sans reliefs, et/ou sans partie creuse, et/ou sans gorge, et/ou sans arrête, et/ou sans aspérité. Cette surface est convexe. Cette géométrie sans aspérité est favorable à l'hygiène buccale, réduit l'accumulation d'aliments et le dépôt de la plaque dentaire. En remarque, lorsque l'élément de cicatrisation est fixé seul sur un implant par l'intermédiaire d'une vis 40, la tête 41 de la vis complète la surface terminale 14, qui devient sensiblement continue, même au niveau de l'ouverture 11. Ainsi, cette surface terminale fermée par la tête de vis présente alors sensiblement la propriété de surface continue, sans reliefs, et/ou sans partie creuse, et/ou sans gorge, et/ou sans arrête, et/ou sans aspérité. Cette architecture rend optimale l'utilisation d'un élément de cicatrisation seul. En complément, l'étanchéité est assurée au niveau de l'interface entre la tête 41 de vis 40 et la surface terminale 14.

En variante, la série d'éléments de cicatrisation pourrait comprendre un nombre différents de géométries différentes, par exemple au moins deux. Dans une variante de réalisation simplifiée, une seule forme d'élément de cicatrisation pourrait convenir pour toutes les dents.

Selon d'autres variantes de réalisation, la section transverse d'un élément de cicatrisation au niveau de sa surface latérale 13 pourrait s'approcher de tout polygone, comme un polygone à trois, cinq ou six côtés. En variante, les angles de ces polygones pourraient être si arrondis que la forme globale s'approcherait d'une forme oblongue, voire de section d'ovoïde, voire de toute autre forme plus éloignée d'un polygone. Avantageusement, cette forme comprend au moins un centre ou point parfaitement défini géométriquement pour définir un centre 15, voire un éventuel axe 18 de l'élément de cicatrisation. Cette section transverse est obtenue par un plan de coupe sensiblement parallèle au plan justogingival.

Selon le mode de réalisation, la géométrie de la surface émergente visible de l'élément de cicatrisation du côté de l'intérieur de la bouche diffère de la géométrie du côté de l'extérieur, pour tenir compte de la courbure de la gencive. Cette forme de la surface émergente de l'élément de cicatrisation est donc asymétrique par rapport à un plan médian contenant la tangente T à la gencive, représentée sur les figures 7A à 7C, et plus précisément sur la figure 19 en considérant une dent 50 à restaurer. Ce plan médian, dit plan tangent T, est parallèle à la tangente T à la gencive, perpendiculaire au plan justogingival PJ, passe au milieu 15 d'un élément de cicatrisation. Autrement dit, la géométrie de la surface émergente visible de l'élément de cicatrisation du côté de l'intérieur de la bouche diffère de la géométrie du côté de l'extérieur, pour tenir compte de la courbure de la gencive ou de la forme naturelle des dents. Notamment, la hauteur suivant l'axe longitudinal de l'élément de cicatrisation du côté lingual, c'est-à-dire du côté de l'intérieur de la bouche, peut être supérieure à la hauteur de l'élément de cicatrisation du côté de l'extérieur de la bouche. La forme de la surface émergente de l'élément de cicatrisation est donc asymétrique par rapport à un plan parallèle à l'axe longitudinal et passant par le centre 113 de la surface terminale 111. D'une part, cette asymétrie peut être caractérisée par des formes différentes de l'élément de cicatrisation de part et d'autre du plan en considérant une projection de l'élément de cicatrisation sur un plan perpendiculaire à l'axe longitudinal. D'autre part, cette asymétrie peut être caractérisée par des hauteurs différentes de l'élément de cicatrisation de part et d'autre du plan. Un exemple d'une telle asymétrie est particulièrement visible sur la figure 15.

Pour les mêmes raisons, la surface émergente et visible de l'élément de cicatrisation n'est donc pas symétrique par rapport à au moins un, ou même plusieurs plans parallèles à son axe 18, et/ou comprenant cet axe 18. Elle n'est pas symétrique par rapport à au moins un, ou plusieurs plans perpendiculaires à la surface émergente et passant par son centre 15 ou comprenant l'axe 18, que nous appelons plans médians perpendiculaires. Dans l'exemple représenté, seul le plan perpendiculaire au plan tangent T mentionné, passant au milieu des deux côtés 141, 142, forme un plan de symétrie. Les remarques précédentes s'appliquent à la surface émergente de l'élément de cicatrisation, ou à sa section transverse par un plan de coupe P défini précédemment, ou à la projection de sa surface émergente sur un tel plan P (parallèle au plan justogingival). Le plan médian perpendiculaire est alors tout plan perpendiculaire au plan P et passant au centre de la géométrie considérée de l'élément de cicatrisation. Alternativement, un plan médian perpendiculaire peut se définir comme tout plan contenant l'axe 18 de l'élément de cicatrisation. Cette surface émergente d'un élément de cicatrisation peut finalement prendre toute forme tridimensionnelle identifiable, permettant de reconnaître l'élément de cicatrisation utilisé et éventuellement de connaître son orientation, pour remplir une seconde fonction qui sera détaillée par la suite.

Les surfaces terminales 14 des éléments de cicatrisation sont prolongées à partir de leur périphérie 146 par la surface latérale 13 autour de laquelle se cicatrise la gencive, et qui donne ainsi la forme de gencive adaptée à la future prothèse sommitale. Cette surface latérale 13 présente plusieurs surfaces 131, 132, 133, 134, sensiblement planes, éventuellement légèrement courbées, s'étendant selon une direction sensiblement parallèle à l'axe 18 de l'élément de cicatrisation et/ou parallèlement à l'axe longitudinal L de l'implant, en prolongeant respectivement les différents côtés 141, 142, 143, 144 de la surface terminale 14 de l'élément de cicatrisation. Les interfaces entre la surface terminale 14 et ces différentes parties de la surface latérale 13 sont réalisées par des surfaces arrondis, sans aspérité, notamment convexes.

L'élément de cicatrisation peut se trouver en matériau plastique, compatible avec une utilisation médicale, et de couleur rose, blanche ou crème. En particulier l'élément de cicatrisation peut être fabriqué à partir d'un matériau polymère, notamment à partir d'un matériau « PEEK ». En variante, il peut être en métal, par exemple en titane, ou peut être en zircone. Effectivement, cet élément de cicatrisation 10 peut être en titane avec un traitement de surface réalisé à partir de nitrure de zircone afin notamment d'améliorer la visibilité de cet élément 10 par des scanners buccaux et ce, tout en étant biocompatible. L'élément de cicatrisation peut être fabriqué par usinage et/ou par moulage et/ou par addition de matière, autrement dit par impression 3D.

L'utilisation des éléments de cicatrisation permet donc de favoriser une cicatrisation idéale de la gencive dans le cadre d'un procédé de restauration dentaire du fait de sa géométrie conçue en phase avec l'anatomie buccale. En remarque, cet élément de cicatrisation peut en variante être totalement sous-gingival et invisible, puis rendu visible par intervention sur la gencive. Dans ce cas, la partie extrême de l'élément de cicatrisation sera toujours appelée abusivement partie émergente.

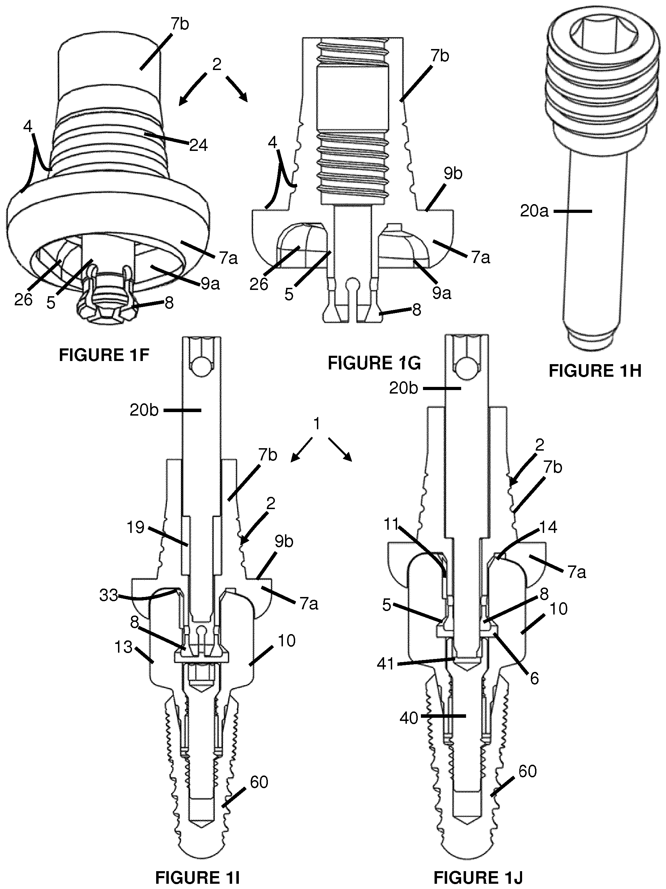

Ainsi que nous l'avons vu précédemment, cet ensemble de restauration dentaire 1 comprenant un élément de cicatrisation 10 apte à une connexion avec un implant dentaire 60, comporte aussi un support 2 amovible d'une prothèse 25. Pour cela, ce support 2 amovible comprend une partie de réception 4 d'une prothèse sommitale 25, temporaire ou définitive, (visible sur la figure 1B). La partie de réception 4 est pourvue d'une première et d'une deuxième composantes 7a, 7b, et d'une partie de liaison 5, particulièrement visible sur les figures 1F et 1G.

Cette partie de liaison 5 est susceptible de coopérer avec une zone de liaison 6 correspondante définie dans l'ouverture traversante 11 ménagée dans l'élément de cicatrisation 10. Effectivement, une telle partie de liaison 5 qui permet de lier mécaniquement de manière amovible ce support 2 à l'élément de cicatrisation 10, comprend notamment au niveau d'une extrémité libre, un élément de fixation 8 tel qu'un premier organe de clippage notamment un organe mâle de clippage, ou une partie filetée. Dans ce contexte, lorsque la partie de liaison 5 comprend le premier organe de clippage, ce dernier est alors apte à coopérer avec une zone de liaison 6 telle qu'une gorge/rainure définie dans la paroi de l'ouverture traversante 11 de l'élément de cicatrisation 10 afin de réaliser cette liaison mécanique. On notera qu'une telle fixation par clippage permet de pouvoir monter et démonter facilement et plusieurs fois le support 2 amovible de l'ensemble de cicatrisation lors de la réalisation de la prothèse sommitale 25 sur le support 2 amovible et ce, afin de pouvoir réaliser des opérations de polissage et/ou de retouche hors de la bouche du patient. On notera que, dans une variante où cet élément de fixation 8 de la partie de liaison 5 comprend une partie filetée, cette dernière est alors apte à coopérer avec une zone de liaison 6 telle qu'une partie taraudée définie dans la paroi de l'ouverture traversante 11 pour la réalisation de cette liaison mécanique.

Dans le mode de réalisation illustré, le support 2 amovible est une pièce monobloc pourvue d'un trou traversant 19 central globalement cylindrique s'étendant longitudinalement dans ce corps d'une extrémité à l'autre du support 2 amovible. La première composante 7a de la partie de réception 4 est pourvue de faces intérieure et extérieure 9a, 9b et d'une paroi périphérique essentiellement arrondie reliant ces faces 9a, 9b entre elles. Dans cette configuration, la deuxième composante 7b fait saillie au niveau d'une région centrale de la face extérieure 9b de la première composante en s'étendant longitudinalement selon un axe A3 qui est sensiblement perpendiculaire à un plan P1 comprenant cette face extérieure 9b. Cette deuxième composante a une forme essentiellement tronconique ou encore cylindrique et comporte une surface extérieure pourvue de plusieurs éléments de rétention 24 d'un élément de liaison de la prothèse sommitale 25 sur la partie de réception 4 et donc sur cette surface. Lorsque cet élément de liaison est par exemple de la colle, chaque élément de rétention 24 peut être une cavité, une rainure, un trou ou encore une aspérité. On notera que chaque élément de rétention 24 peut également être un marqueur apportant une information sur une hauteur maximale de retouche de la prothèse sommitale et/ou du support. En complément, une partie du trou traversant 19 du support 2 amovible, définie au niveau de cette deuxième composante 7b, comprend une paroi qui est en tout ou partie taraudée.

Dans ce support 2 amovible, la partie de liaison 5 fait saillie dans une région centrale de la face intérieure 9a de la première composante 7a. Cette partie de liaison 5 est notamment prévue pour être insérée dans l'ouverture traversante 11 de l'élément de cicatrisation 10 lorsque le support 2 amovible est assemblé à cet élément de cicatrisation 10. Cette partie de liaison 5 comporte une portion tronconique ou sensiblement tronconique, apte à coopérer avec la portée conique 33 de l'élément de cicatrisation 10 pour former une interface étanche entre le support 2 amovible et l'élément de cicatrisation 10. Une telle partie de liaison 5 comprend au niveau de son extrémité libre l'élément de fixation 8 tel que le premier organe de clippage. Selon ce mode de réalisation, ce premier organe de clippage est compris à une extrémité du trou traversant 19 de ce support 2 amovible, et comporte plusieurs ailettes flexibles, ici deux, trois ou quatre, agencées autour de l'axe du trou traversant 19, jusqu'à son extrémité inférieure. Ces ailettes sont espacées les unes des autres d'un écart sensiblement similaire résultant d'un évidemment de matière. De telles ailettes sont susceptibles de passer d'une position de repos à une position de contrainte lorsqu'elles sont déplacées sensiblement radialement. Ces ailettes présentent chacune une forme qui est complémentaire à la zone de liaison 6 telle que la gorge avec laquelle elles sont susceptibles de coopérer afin de réaliser cette fixation par clippage.

Dans ce support 2 amovible, la face intérieure 9a de la première composante 7a est notamment prévue pour couvrir tout ou partie de la surface émergente de l'élément de cicatrisation 10 et notamment de préférence toute la surface terminale 14 et une partie de la surface latérale 13 jouxtant cette surface terminale 14, comme cela est visible sur les figures 1I et 1J. Ainsi, la face intérieure 9a comprend une cavité 26 définie autour de la partie de liaison 5 qui présente une forme complémentaire à celle de tout ou partie de la surface émergente avec laquelle elle est susceptible d'être en contact.

Dans ce mode de réalisation, l'ensemble de restauration dentaire 1 peut comprendre un élément de verrouillage 20a, 20b pour rigidifier le support 2 amovible, comprenant un corps pourvu de première et deuxième extrémités et ayant une forme globalement cylindrique. En référence à la figure 1H, cet élément de verrouillage 20a, 20b peut par exemple être une vis 20a, comprenant une tête et une tige. La tête est alors comprise dans la première extrémité supérieure du corps de cet élément de verrouillage 20a et comporte une partie filetée qui est apte à coopérer avec la partie de réception 4, en particulier avec une paroi intérieure du trou traversant 19 définie au niveau de la deuxième composante 7b qui est en tout ou partie taraudée. De manière alternative, en référence aux figures 1I et 1J, cet élément de verrouillage 20a, 20b peut être une tige 20b dont une partie du corps fait saillie du trou traversant 19 au niveau de la deuxième composante 7b de la partie de réception 4, lorsque cette tige est agencée dans l'ensemble de restauration dentaire 1. Un tel élément de verrouillage 20a, 20b est prévu pour être inséré dans l'ensemble de restauration dentaire 1 en traversant le trou traversant 19 du support 2 amovible et en pénétrant dans l'ouverture traversante 11 de l'élément de cicatrisation 10, afin d'actionner les ailettes flexibles du premier organe de clippage pour qu'elles se déplacent ainsi de la position de repos vers la position de contrainte. En étant ainsi dans la position de contrainte, une plus grande partie de ces ailettes est alors agencée dans la gorge définie dans la paroi de l'ouverture traversante 11 et/ou l'échappement par rétractation de ces ailettes est impossible, ce qui remplit ainsi la fonction de verrouillage de l'assemblage du support 2 amovible avec l'élément de cicatrisation 10, voire avec l'ensemble de cicatrisation formé par l'implant 60 et l'élément de cicatrisation 10. Dans ce contexte seul le retrait de cet élément de verrouillage 20a, 20b du trou traversant 19 et de l'ouverture traversante 11 permet d'autoriser ainsi un désengagement des ailettes de ladite gorge. On notera que l'élément de verrouillage 20a, 20b est inséré dans le trou traversant 19 jusqu'à ce que sa deuxième extrémité qui traverse également l'ouverture traversante 11 de l'élément de cicatrisation 10 est agencée dans un logement défini dans la tête de vis 41 de la vis 40 reliant mécaniquement l'élément de cicatrisation 10 à l'implant 60. Ainsi lors d'un tel agencement de l'élément de verrouillage 20a, 20b dans l'ensemble de restauration dentaire 1, le corps de cet élément de verrouillage 20a, 20b est alors compris entre les ailettes flexibles qui sont maintenues dans la position de fixation par clippage. On notera que lorsque cet élément de verrouillage 20a, 20b correspond à la vis 20a illustrée sur la figure 1H, sa première extrémité supérieure est comprise dans le trou traversant 19 et sa deuxième extrémité inférieure est localisée dans l'ouverture traversante 11 de l'élément de cicatrisation 10, en particulier dans le logement défini dans la tête de vis 41 de la vis 40 reliant mécaniquement l'élément de cicatrisation 10 à l'implant 60.

Outre les avantages décrits précédemment, l'élément de cicatrisation 10 permet la mise en oeuvre d'un procédé de restauration avantageux, comprenant un procédé de fabrication d'une prothèse dentaire et d'un pilier définitifs, avec une traumatisation minimale de la gencive. En effet, il est possible d'obtenir une empreinte numérique ou physique de la zone à restaurer sans retirer l'élément de cicatrisation en bouche, donc sans heurter la gencive. Ainsi, en plus de sa première fonction de cicatrisation, détaillée précédemment, l'élément de cicatrisation remplit une seconde fonction lors du procédé de restauration, en permettant la définition avantageuse de la forme du pilier de restauration et/ou de la prothèse avant son retrait. Cette fonction est complémentaire de sa première fonction de cicatrisation puisqu'elle permet de ne pas traumatiser la gencive après sa cicatrisation selon une forme anatomique avantageuse choisie.

Pour cela, en fin de la phase de cicatrisation du procédé de restauration dentaire, un praticien peut prendre une empreinte numérique de la bouche du patient, sans retirer l'élément de cicatrisation (le capuchon).

Les données de numérisation, obtenues par tout appareil comme un scanner buccal par exemple, sont transmises automatiquement à un ordinateur doté d'un logiciel de restauration dentaire. Ce logiciel est doté d'une interface homme machine, par laquelle un opérateur peut indiquer le modèle de capuchon qu'il a utilisé, ou plus généralement la référence de l'élément de cicatrisation, et éventuellement de l'implant et/ou de l'embase de pilier utilisé.

A partir des données de numérisation, un logiciel détermine automatiquement l'axe de l'élément de cicatrisation, par construction géométrique, par exemple à partir de l'identification du centre 15 du capuchon et de la direction perpendiculaire à la surface terminale 14 passant par ce centre 15. Par cette construction, il peut ainsi déterminer automatiquement l'axe de l'implant, sans avoir à le visualiser directement. En effet, l'élément de cicatrisation est avantageusement aligné avec l'implant, son axe étant ainsi confondu avec celui de l'implant.

Ensuite, comme la géométrie de l'élément de cicatrisation correspond à un positionnement unique autour de son axe 18, ou autour de l'axe longitudinal L de l'embase de pilier, pour respecter le milieu buccal et notamment la géométrie de la gencive vers l'intérieur de la bouche (côté lingual) qui diffère de sa géométrie vers l'extérieur (côté vestibulaire), il est possible de déduire de son orientation l'orientation de l'axe du dispositif de connexion avec l'implant, par exemple le dispositif de connexion 3 de l'embase de pilier avec l'implant : cela permet d'en déduire automatiquement le positionnement du dispositif de connexion de l'implant, sans avoir à le visualiser directement. A titre d'exemple, il est possible d'imposer lors de cette construction que l'un des côtés parallèles de la forme trapézoïdale de la surface 14 visible du capuchon soit parallèle à un côté de l'hexagone du dispositif de fixation d'un implant.

Enfin, dans le cas où des éléments de cicatrisation de hauteur différente existent, il reste à déterminer cette hauteur, pour positionner parfaitement l'implant invisible. Une première approche peut consister à former des éléments de cicatrisation de couleur différente pour des hauteurs différentes.

Une seconde approche consiste à disposer tout indicateur sur la surface 14 visible de l'élément de cicatrisation pour indiquer cette hauteur, cet indicateur pouvant être composé de chiffres et/ou de lettres et/ou de tout symbole et/ou de couleurs et/ou de marquages laser et/ou d'un ou plusieurs codes-barres et/ou de codes datamatrix et/ou de tout code d'identification. Une troisième approche peut consister à former des éléments de cicatrisation présentant une surface 14 visible différente selon leur hauteur. A titre d'exemple, les capuchons A, B, C, D pourraient conserver la même forme mais avec des dimensions légèrement plus grandes pour des hauteurs plus importantes, permettant ainsi de les différencier automatiquement puis de déterminer leur hauteur.

En variante ou complément de réalisation, un opérateur saisit par une interface homme machine la référence de l'élément de cicatrisation, ce qui permet au logiciel de retrouver les caractéristiques de cet élément de cicatrisation comme sa hauteur, son centre et/ou axe, dans une bibliothèque présente sous forme de base de données stockée dans une mémoire électronique qu'il peut consulter. En variante, le logiciel peut reconnaître automatiquement l'élément de cicatrisation à partir de ses caractéristiques géométriques, sans saisie manuelle de sa référence. Un opérateur peut assister un logiciel au bon positionnement d'un repère du capuchon réel, c'est-à-dire à la reconnaissance de son positionnement réel, en saisissant sur une image obtenue par l'étape de numérisation mentionnée ci-dessus et présentée à l'opérateur sur un écran d'une interface homme machine un ou plusieurs points de la surface émergente.

A partir des données numérisées, et éventuellement de l'aide du ou des points de la surface de l'élément de cicatrisation manuellement renseignés par un opérateur, le logiciel sait donc associer l'élément de cicatrisation virtuel issu de sa bibliothèque à l'environnement buccal numérisé, en remplacement de l'élément de cicatrisation réel, pour obtenir une reproduction numérique plus parfaite. En remarque, la forme de l'élément de cicatrisation réel permet de déterminer son orientation, notamment du fait de sa forme asymétrique, comme mentionné précédemment. Il est possible de positionner parfaitement l'élément de cicatrisation virtuel sur l'empreinte numérique, automatiquement ou éventuellement par l'intermédiaire d'une intervention d'un opérateur sur une interface homme machine permettant de visualiser l'empreinte buccale et l'élément de cicatrisation. Ce positionnement parfait de l'élément de cicatrisation virtuel permet d'en déduire toutes les géométries avoisinantes, à partir des références connues mémorisées dans la base de données associée à l'élément de cicatrisation précis considéré, dont la position de l'implant 60 et la géométrie de la gencive cicatrisée sans présence de l'élément de cicatrisation 10, ni d'une éventuelle embase de pilier dans la variante de réalisation non monobloc.

Lorsque le logiciel de restauration a repositionné avec exactitude le positionnement de l'implant caché, il déduit de ces connaissances la géométrie finale du pilier de restauration à fabriquer, qui doit être fixé à l'implant et occuper tout le volume gingival défini par l'élément de cicatrisation, puis la géométrie de la prothèse dentaire destinée à se fixer sur ce pilier, de manière connue.

En remarque, ce procédé de restauration peut se faire totalement numériquement, donc virtuellement, ou comprendre des phases de construction d'une maquette en plastique ou plâtre. Dans ce dernier cas, une empreinte physique, par exemple en silicone, peut être réalisée, un plâtre peut être coulé dans l'empreinte pour créer le maître modèle, c'est à dire une réplique de l'arcade dentaire à restaurer, qui est ensuite scannée en laboratoire pour reconstruire une image numérique.

Finalement, le mode de réalisation est avantageux en ce qu'il propose un élément de cicatrisation qui regroupe trois fonctions complémentaires :
- la fonction de cicatrisation : pour cela, il comprend une surface autour de laquelle la gencive se cicatrise. Dans le mode de réalisation décrit, cette cicatrisation est avantageuse en ce qu'elle est anatomique, comme décrit précédemment ;
- la fonction de prise d'empreinte : il permet en effet une prise d'empreinte sans traumatisme en fin de phase de cicatrisation, avantageusement sans besoin de le retirer de la bouche du patient. En remarque, cette prise d'empreinte est nécessaire pour pouvoir fabriquer l'ensemble de restauration définitif. Dans le mode de réalisation décrit, cette prise d'empreinte est numérique, et peut être en tout ou partie automatisée ;
- la fonction de maintien d'une prothèse : il permet en effet la fixation d'une prothèse sommitale 25, prothèse dont une première fonction est esthétique. Elle présente pour cela avantageusement une forme qui imite globalement la forme d'une dent.

Le fait de regrouper ces trois fonctions sur un même élément procure donc de nombreux avantages complémentaires, de manière flexible.

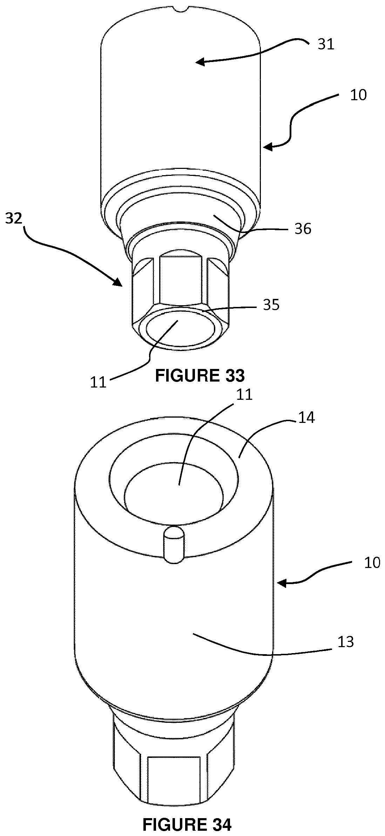

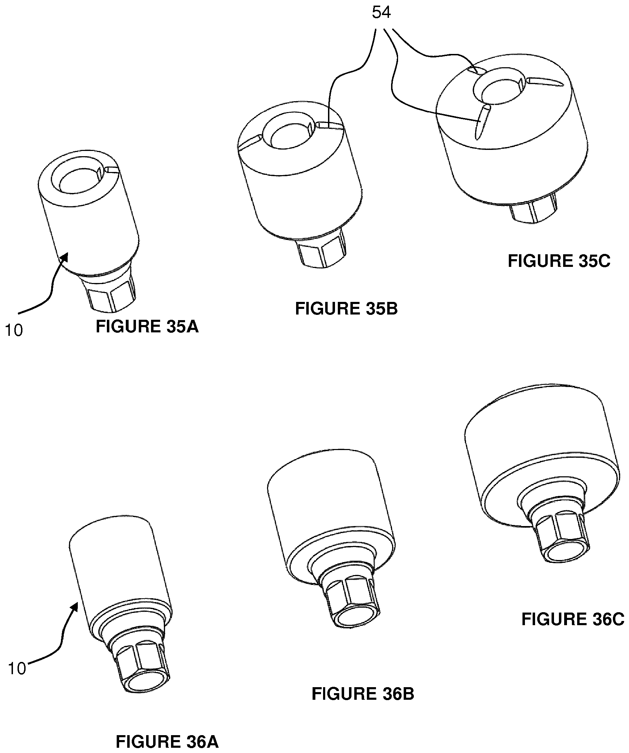

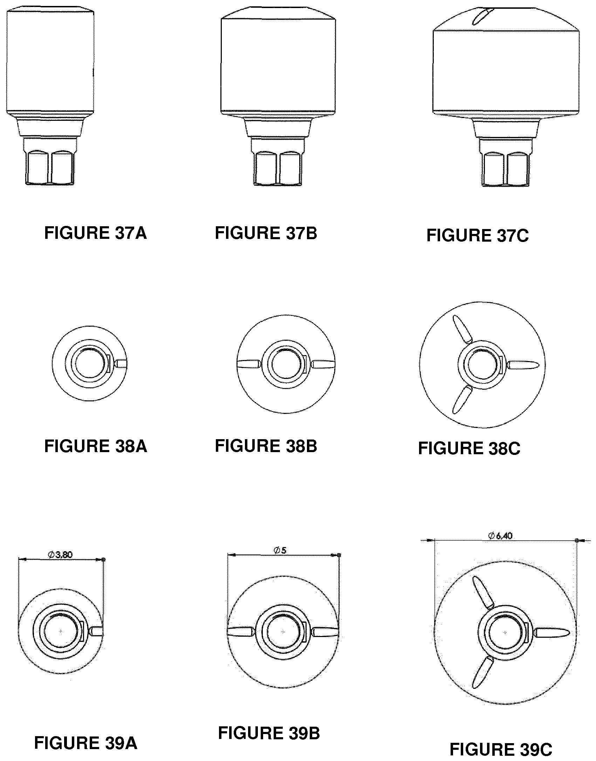

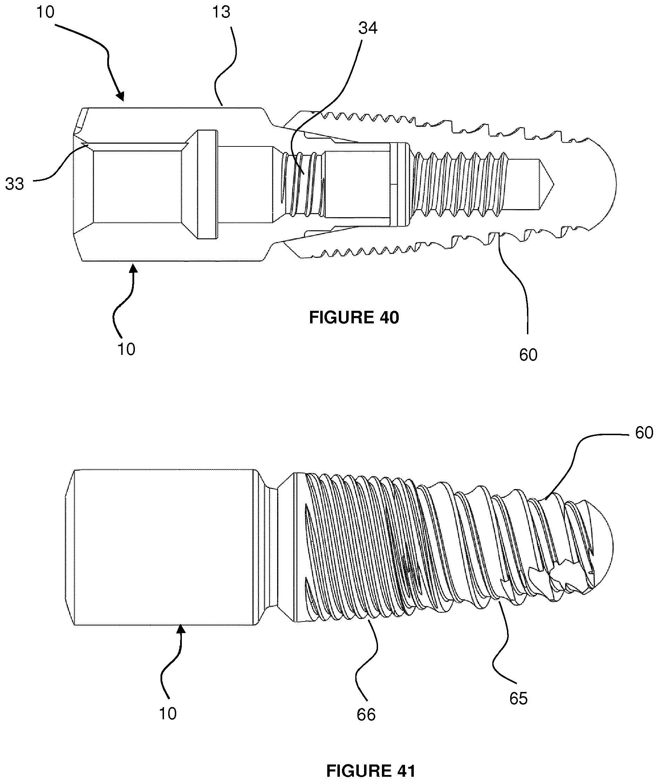

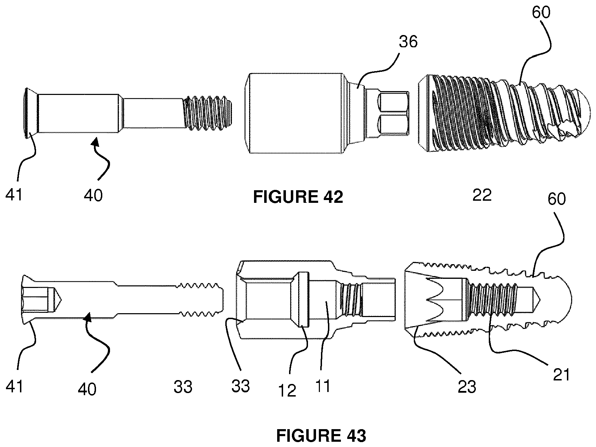

Naturellement, l'invention ne se limite pas au mode de réalisation décrit précédemment. L'élément de cicatrisation peut ainsi présenter d'autres moyens de mettre en oeuvre les trois fonctions résumées ci-dessus. Selon une variante de réalisation simplifiée, la surface de cicatrisation peut se présenter sous une forme cylindrique, comme représenté par les figures 33 à 43. Une telle approche ne permet plus de former une cicatrisation anatomique mais présente l'avantage de la simplicité, en permettant la standardisation et la fabrication facile de cette surface de cicatrisation, et donc plus globalement de l'élément de cicatrisation. Du fait de cette forme cylindrique, la surface de cicatrisation ne permet plus de remplir la deuxième fonction de prise d'empreinte. Dans un mode de réalisation tel que représenté par les figures 35 à 39, il est possible de prévoir une série d'éléments de cicatrisation comprenant une surface de cicatrisation de diamètres différents, standards.

Pour pallier cet inconvénient, la surface émergente de l'élément de cicatrisation 10, formée par la surface terminale 14 et éventuellement la partie supérieure de la surface latérale 13, peut comprendre avantageusement au moins deux marqueurs informatifs permettant l'identification d'au moins deux caractéristiques de l'élément de cicatrisation 10 et/ou indirectement de l'embase de pilier et/ou de l'implant dentaire 60. L'aménagement de tels marqueurs informatifs sur l'élément de cicatrisation 10 permet de ne pas avoir recours à une technique de prise d'empreinte traditionnelle sur l'implant, mais de pouvoir procéder à une empreinte automatique numérique telle que décrite précédemment, sans retrait de l'élément de cicatrisation 10.

Selon un mode de réalisation, les caractéristiques identifiées par les marqueurs informatifs comprennent un ou plusieurs éléments parmi :
- la hauteur de l'élément de cicatrisation 10,
- la forme de l'élément de cicatrisation 10, notamment la forme et les dimensions de la section transverse de sa surface latérale 13 ou de la projection sur un plan parallèle de la surface émergente,
- les dimensions de la partie de liaison de l'élément de cicatrisation 10 avec ou sans embase de pilier, et donc de l'implant dentaire 60,
- l'orientation de l'implant dentaire 60, par l'intermédiaire de l'orientation du capuchon, par exemple par un marqueur aligné avec un élément anti-rotationnel du capuchon.

Selon un mode de réalisation particulier, lesdits au moins deux marqueurs informatifs comprennent un premier type de marquage informatif d'une première caractéristique de l'élément de cicatrisation 10 et un deuxième type de marquage informatif d'une deuxième caractéristique de l'élément de cicatrisation 10. Ces première et deuxième caractéristiques liées à l'élément de cicatrisation 10 sont en particulier la hauteur de l'élément de cicatrisation 10 et/ou la forme de l'élément de cicatrisation 10, notamment la forme et les dimensions de la section transverse de sa surface latérale 13 ou de la projection sur un plan parallèle de la surface émergente. Indirectement, un marqueur peut permettre d'en déduire une information sur l'embase de pilier quand il y en a une et indirectement sur l'implant, comme leur orientation, qui peut être liée à l'orientation de l'élément de cicatrisation.

Sans que cela ne soit limitatif quant à la liberté de conception des marqueurs informatifs, chaque marqueur informatif appartient notamment à l'un des types suivants :
- un marqueur informatif négatif 54, notamment en creux dans l'une des surfaces de l'élément de cicatrisation 10, particulièrement sur sa surface émergente, comme représenté sur les figures 33 à 40 ;
- un marqueur informatif positif, notamment en relief sur l'une des surfaces de l'élément de cicatrisation 10, particulièrement sur sa surface émergente,
- un marqueur informatif de forme particulière et identifiable formée dans l'une des surfaces de l'élément de cicatrisation 10, notamment de forme polygonale ou de ligne,
- un marqueur informatif constitué par une valeur numérique lisible ou par un code d'identification lisible tel qu'un code barres et/ou un code datamatrix. Ce marqueur peut être composé de chiffres et/ou de lettres et/ou de tout symbole et/ou de couleurs et/ou de marquages laser,
- un moyen informatif constitué d'une puce RFID.

Ce ou ces marqueurs sont particulièrement nécessaires dans ce mode de réalisation simplifié avec surface de cicatrisation cylindrique. Toutefois, au moins un marqueur pourrait en variante être implémenté dans les autres réalisations, pour apporter une information complémentaire ou redondante lors d'une prise d'empreinte.

La variante précédente a été décrite avec une approche de simplicité maximale pour la surface remplissant la fonction de cicatrisation. Selon une variante opposée, cette surface pourrait être conçue sur mesure pour chaque patient, et donc être unique, dans le but d'atteindre la forme la plus anatomique possible, c'est-à-dire la plus adaptée possible à la bouche particulière du patient concerné. Dans ce cas, une base de données stockée sur une mémoire électronique comprenant des données numériques représentatives virtuellement de la forme de l'élément de cicatrisation associées à au moins une donnée d'identification du patient est élaborée. Cela permet une prise d'empreinte numérique en fin de cicatrisation, par la superposition de l'élément de cicatrisation virtuel provenant de la base de données à l'élément de cicatrisation numérisé, par exemple par une assistance d'un opérateur sur une interface homme machine, pour identifier automatiquement l'espace caché au niveau de la gencive au-dessus de l'implant, non directement visible par une numérisation par un scanner. Cette procédure de prise d'empreinte est semblable à celle décrite en détail précédemment en référence avec les figures 2 à 21, sans la reconnaissance automatique de l'élément de cicatrisation mais par sa reconnaissance à partir d'une donnée d'identification stockée dans une base de données.

Dans les variantes précédentes comprenant une prise d'empreinte numérique, il convient donc de bien différencier une solution avec un marqueur par rapport à la non utilisation de marqueur :
- un marqueur se définit comme un symbole ou une forme spécifique, dédiée à sa reconnaissance, qui a pour seule fonction cette reconnaissance ; le marqueur est généralement conçu spécifiquement pour être facilement reconnu par un scanner. Il a généralement aucun impact ou un impact négatif sur la fonction principale de cicatrisation de l'élément de cicatrisation ;
- l'alternative de l'invention consiste à ne pas utiliser de marqueur, mais à reconnaître la forme particulière de l'élément de cicatrisation, notamment sa partie terminale, pour en déduire une information recherchée. Dans ce cas, la forme reconnue a en premier lieu une fonction technique principale de cicatrisation anatomique. L'invention profite notamment d'un caractère anatomique pour se passer de marqueur. La reconnaissance est plus difficile avec cette alternative, mais elle présente l'avantage de ne pas détériorer la forme idéale pour la cicatrisation dans le but secondaire de former un indicateur. La solution de cette alternative sans marqueur, ou avec moins de marqueur (qu'une solution basée uniquement sur des marqueurs), est donc avantageuse et préférée.

Le mode de réalisation et ses variantes permettent de remplir la fonction de prise d'empreinte de manière numérique, par exemple à partir d'un scanner buccal. En variante qui va être décrite ci-après, cette prise d'empreinte pourrait être réalisée à partir d'une prise d'empreinte physique traditionnelle, que nous pouvons aussi appelée prise d'empreinte manuelle, auquel cas les marqueurs ou autres caractéristiques spécifiques ne sont plus obligatoires. En remarque, les différentes variantes du mode de réalisation présentent des complémentarités et pourraient être combinées.

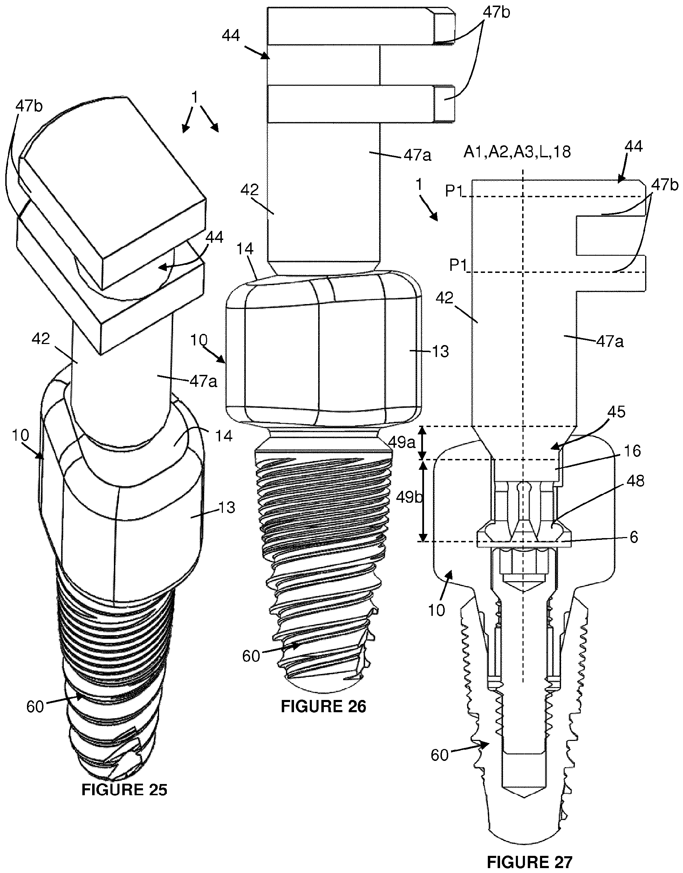

Ainsi, selon une autre variante de réalisation représentée par les figures 25 à 27, la deuxième fonction de prise d'empreinte est mise en oeuvre à l'aide d'un élément de transfert d'empreinte 42 amovible, aussi appelé porte-empreinte. Cet élément de transfert d'empreinte 42 est pourvu d'une partie de fixation 44 comprenant au moins un élément d'ancrage 47b et une partie de liaison 45.

Cette partie de fixation 44 de l'élément de transfert d'empreinte 42 est susceptible de coopérer avec un matériau d'empreinte. Une telle prise d'empreinte permet de reporter/transposer dans le matériau d'empreinte la position exacte de l'ensemble de cicatrisation formé par l'implant 60 et l'élément de cicatrisation 10 dans la mâchoire du patient mais également le relief précis de la gencive définie autour de l'élément de cicatrisation 10, en particulier de sa surface latérale 13.

Le porte-empreinte est donc un outil permettant d'enregistrer par empreinte dans le matériau de prise d'empreinte, tel qu'une pâte appropriée, les volumes des arcades dentaires du patient en particulier celle du maxillaire inférieur et supérieur. Ce porte-empreinte est donc adapté pour porter dans la cavité buccale du patient ladite pâte nécessaire pour réaliser les enregistrements précités. Cette pâte peut être de préférence du silicone, de l'alginate, de l'hydrocolloïde, etc...

Ce porte-empreinte 42 est une pièce monobloc en métal ou en matière plastique, de préférence jetable et pouvant être du type « porte-empreinte à ciel fermé ». Il est obligatoirement rigide pour éviter toutes déformations lors de sa mise en place ou de son enlèvement de la bouche du patient. Ce porte-empreinte est adapté à l'anatomie de la mandibule et du maxillaire du patient qui peut être denté ou édenté.

Ce porte-empreinte peut comporter une gouttière en forme générale d'arche à tronçon incurvé central prolongé de part et d'autre par deux branches latérales. Cette gouttière peut être formée d'une paroi de fond bordée longitudinalement par deux parois latérales, intérieure et extérieure de sorte à définir une gorge réceptrice pouvant être remplie du matériau de prise d'empreinte.

Lorsque comme dans le présent mode de réalisation, la partie de fixation 44 du porte-empreinte 42 comprend plusieurs éléments d'ancrage, en particulier deux, ceux-ci sont alors agencés dans cette partie 44 en étant superposés les uns par rapport aux autres.

En variante non représentée, le porte-empreinte 42, à la différence de celui décrit et représenté, qui est monobloc, pourrait comprendre deux pièces distinctes.

En complément, la partie de liaison 45 du porte-empreinte 42 fait saillie dans une région centrale de la face intérieure 49a d'une partie inférieure 47a. Cette partie de liaison 45 est notamment prévue pour être insérée dans l'ouverture traversante 11 par le haut de l'élément de cicatrisation 10. En remarque, cette association peut se faire de manière similaire à la liaison du support 2 de prothèse avec l'élément de cicatrisation 10 décrite en référence avec les figures 1A à 1J. Une telle partie de liaison 45 comprend au niveau de son extrémité libre un élément de fixation 48, par exemple de type clip ou partie filetée. Cette partie de fixation 48 est apte à coopérer avec la partie correspondante définie dans la paroi de l'ouverture traversante 11 pour la réalisation de cette liaison mécanique entre le porte-empreinte 42 amovible et l'élément de cicatrisation 10.

Ainsi, en fin de cicatrisation, le support 2 portant la prothèse 25 est retiré de l'élément de cicatrisation 10, et le porte-empreinte 42 est disposé à sa place pour procéder à la prise d'empreinte. Dans cette variante de réalisation, la surface de cicatrisation peut prendre toute forme, notamment parmi les variantes décrites précédemment.

En complément, l'élément de cicatrisation permet de supporter une prothèse 25, pour offrir un patient une solution temporaire esthétique avant la restauration finale. Pour cela, comme cela a été décrit précédemment, l'élément de cicatrisation 10 est prévu pour une association avec un support 2 de prothèse.

On notera que l'extrémité de ce support 2 amovible comprend un logement défini au niveau de la deuxième composante 7b qui est apte à recevoir un outil adapté tel qu'un tournevis permettant d'assurer le vissage de la deuxième pièce définissant la deuxième composante 7b et la partie de liaison 5, dans l'ouverture traversante 11 de l'élément de cicatrisation 10 pour le montage de ce support 2 amovible avec l'élément de cicatrisation 10.

Dans des variantes de réalisation non illustrés, le support 2 amovible, à la différence du support du premier mode de réalisation qui est monobloc, peut comprendre deux pièces distinctes. La première pièce correspond à la partie de réception 4 du support 2 amovible. Cette partie de réception 4 est pourvue d'un alésage central globalement cylindrique s'étendant longitudinalement dans ce corps d'une extrémité à l'autre de cette partie de réception 4. Cette partie de réception 4 comporte aussi les première et deuxième composantes 7a, 7b, et la première composante 7a est pourvue de faces intérieure et extérieure 9a, 9b et d'une paroi périphérique reliant ces faces entre elles. Dans cette configuration, la deuxième composante 7b fait saillie au niveau d'une région centrale de la face extérieure 9b de la première composante 7a en s'étendant longitudinalement selon un axe A3 qui est sensiblement perpendiculaire à un plan P1 comprenant cette face extérieure 9b. Cette deuxième composante 7b a une forme essentiellement tronconique ou encore cylindrique.

Dans une telle variante du support 2 amovible, la deuxième pièce forme la partie de liaison 5, qui est une vis pourvue d'une tête et d'une tige, susceptible d'être insérée dans l'alésage ménagé dans la partie de réception 4 lors du montage du support 2 amovible sur l'élément de cicatrisation 10. Ainsi lorsque les deux pièces sont assemblées ensemble pour former le support 2 amovible en étant montées sur l'élément de cicatrisation 10, la partie de liaison 5 fait saillie dans une région centrale de la face intérieure 9a de la première composante 7a. La tête de la vis formant cette partie de liaison 5 est alors agencée dans l'alésage et une extrémité de la tige dans l'ouverture traversante 11 de l'élément de cicatrisation 10. Autrement dit, cette partie de liaison 5 est notamment prévue pour être insérée dans l'ouverture traversante 11 de l'élément de cicatrisation 10 lorsque le support 2 amovible est assemblé à cet élément de cicatrisation 10. Une telle partie de liaison 5 comprend au niveau de son extrémité libre une partie filetée. Cette partie filetée est apte à coopérer avec la zone de liaison 6, ici une partie taraudée définie dans la paroi de l'ouverture traversante 11, pour la réalisation de cette liaison mécanique entre le support 2 amovible et l'élément de cicatrisation 10.

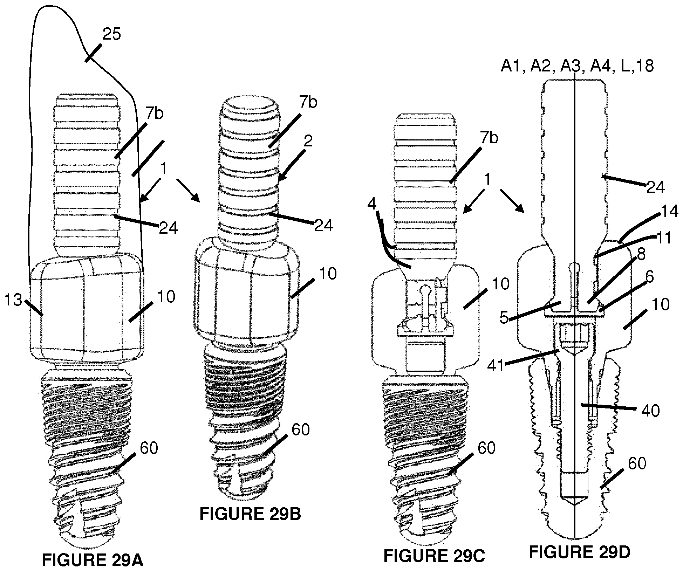

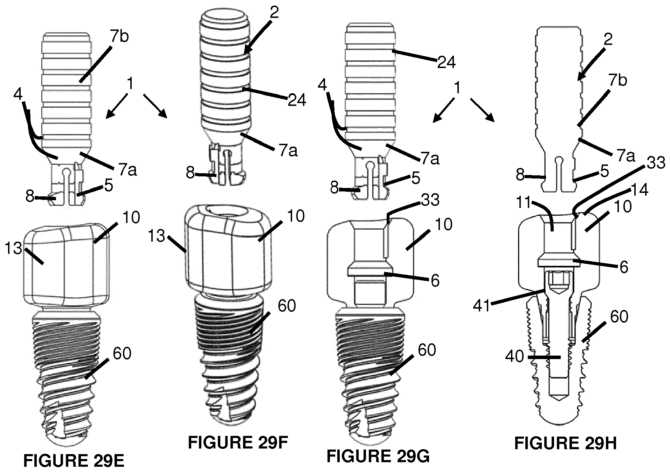

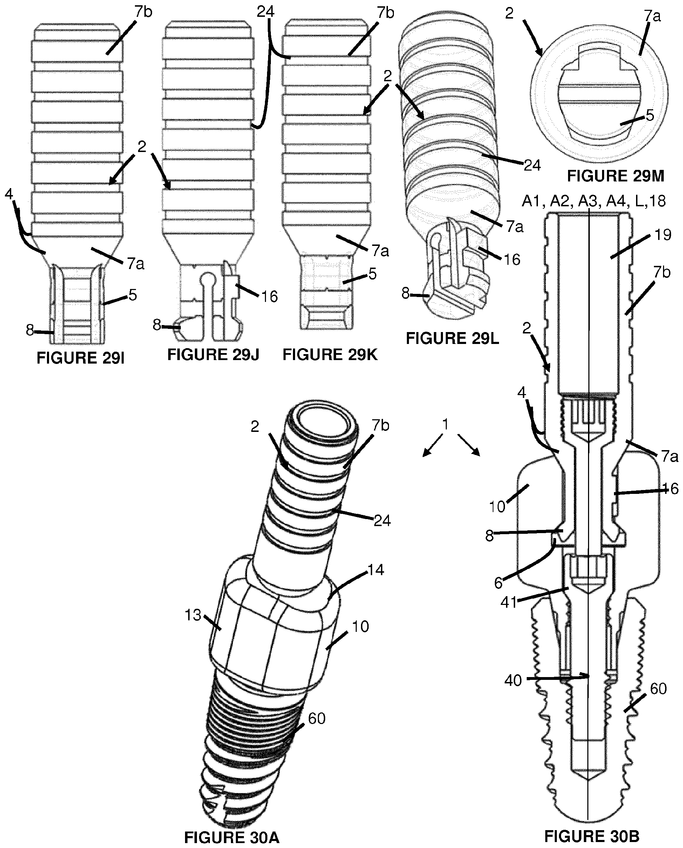

Dans une autre variante du mode de réalisation illustré sur les figures 29A à 29M, le support 2 amovible est une pièce monobloc. Dans ce support 2 amovible, la première composante 7a de la partie de réception 4 relie la deuxième composante 7b à la partie de liaison 5. Dans cette configuration, la deuxième composante 7b s'étend longitudinalement selon un axe A3. Cette deuxième composante 7b a une forme essentiellement cylindrique et comporte une surface extérieure pourvue de plusieurs éléments de rétention 24 d'un élément de liaison de la prothèse 25 sommitale sur la partie de réception 4 de manière similaire au mode de réalisation décrit précédemment en référence avec les figures 1A à 1J. On notera que chaque élément de rétention 24 peut également être un marqueur apportant une information sur une hauteur maximale de retouche de la prothèse sommitale et/ou du support.

Dans ce support 2 amovible, la première composante 7a est pourvue d'une portion tronconique coopérant avec la portée conique 33 de l'élément de cicatrisation 10 pour rendre étanche une interface entre l'élément de cicatrisation 10 et le support 2 amovible et pour réduire à zéro tout jeu en translation entre l'élément de cicatrisation 10 et le support 2 amovible.

La partie de liaison 5 de ce support 2 amovible est notamment prévue pour être insérée dans l'ouverture traversante 11 de l'élément de cicatrisation 10 lorsque le support 2 amovible est assemblé à cet élément de cicatrisation 10. Cette partie de liaison 5 comporte de plus l'élément de fixation 8, formé par le premier organe de clippage comprenant deux ailettes flexibles selon ce mode de réalisation. Ces deux ailettes sont espacées l'une de l'autre d'un écart résultant d'un évidemment de matière. De telles ailettes sont susceptibles de passer élastiquement d'une position de repos à une position de contrainte lorsqu'elles sont déplacées sensiblement radialement. Ces ailettes présentent chacune une forme qui est complémentaire à la zone de liaison 6 avec laquelle elles sont susceptibles de coopérer afin de réaliser une fixation par clippage.

Cette partie de liaison 5 comprend de plus un élément anti-rotationnel 16 pour une bonne tenue du support 2 amovible dans l'élément de cicatrisation 10. Cet élément anti-rotationnel 16 est défini sur une partie d'une paroi périphérique de cette partie de liaison 5 qui est en regard avec la paroi de l'ouverture traversante 11 de l'élément de cicatrisation 10 au-dessus de la zone de liaison 6 comprenant le deuxième élément de clippage, lorsque le support 2 amovible est assemblé à l'élément de cicatrisation 10.

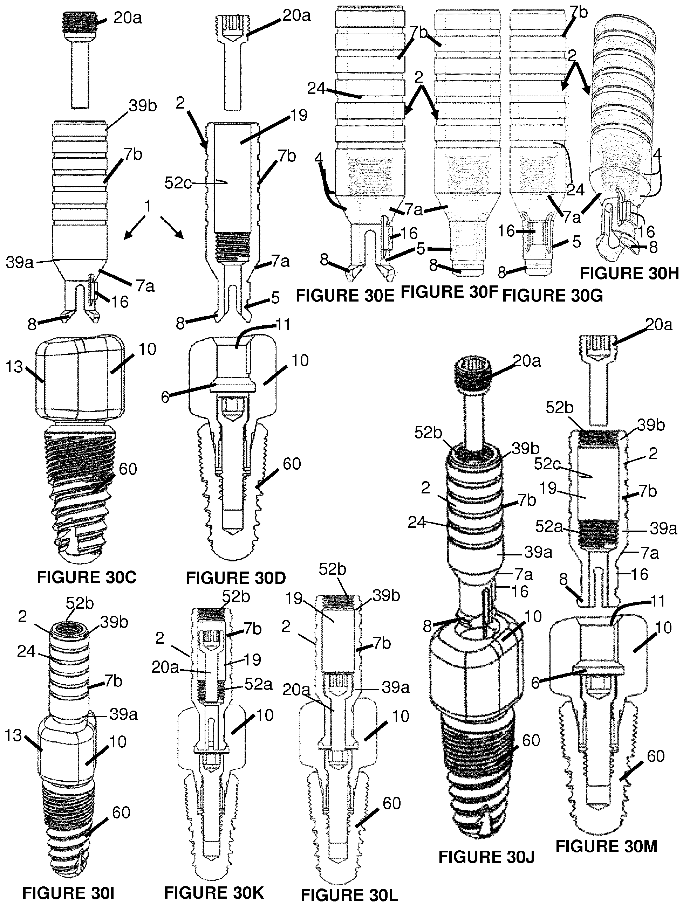

Les figures 30A à 30M illustrent une autre variante du mode de réalisation, dans laquelle le support 2 amovible est sensiblement similaire à celui de la variante précédente. La seule différence entre ces deux variantes de réalisation est liée à la présence d'un trou traversant 19 dans le support 2 amovible de cette autre variante de réalisation. En effet, le support 2 amovible est une pièce monobloc pourvue de ce trou traversant 19 central globalement cylindrique s'étendant longitudinalement dans le corps d'une extrémité à l'autre du support 2 amovible. Une partie de ce trou traversant 19 du support 2 amovible définie au niveau de la deuxième composante 7b comprend une paroi qui est en tout ou partie taraudée. Dans cette configuration, un organe de clippage est compris à une extrémité de ce trou traversant 19 de ce support 2 amovible, comprenant plusieurs ailettes flexibles, notamment deux, définissant donc cette extrémité du trou traversant 19.

Dans cette autre variante du mode de réalisation, l'ensemble de restauration dentaire 1 peut comprendre un élément de verrouillage 20a pour rigidifier le support 2 amovible, comprenant un corps pourvu de première et deuxième extrémités et ayant une forme globalement cylindrique. Cet élément de verrouillage 20a peut par exemple être une vis comprenant une tête et une tige qui est sensiblement similaire à l'élément de verrouillage 20a illustré sur les figures 1H, 30C, 30D et 30K à 30M. La tête de cet élément de verrouillage 20a est alors comprise dans la première extrémité du corps de cet élément de verrouillage 20a et comporte une partie filetée qui est apte à coopérer avec la partie de réception 4 en particulier avec une paroi du trou traversant 19 définie au niveau de cette deuxième composante 7b qui est en tout ou partie taraudée. En effet, cette paroi du trou traversant 19 peut comprendre au moins un filet 52a, 52b, plus précisément dans une première variante de l'élément de support 2 cette paroi comprend un seul filet 52a défini dans une partie inférieure 39a de la deuxième composante 7b, et dans une deuxième variante de ce support 2, la paroi comprend deux filets 52a, 52b agencés respectivement dans la partie inférieure 39a et dans une partie supérieure 39b de cette deuxième composante 7b. Dans ces deux variantes du support 2 amovible, la partie restante 52c de cette paroi du trou traversant 19, n'est pas taraudée. Un tel élément de verrouillage 20a est prévu pour être inséré dans l'ensemble de restauration dentaire 1 en traversant le trou 19 du support 2 amovible et l'ouverture traversante 11 de l'élément de cicatrisation 10 afin d'actionner les ailettes flexibles formant un organe de clippage pour qu'elles se déplacent ainsi de la position de repos vers la position de contrainte. En étant ainsi dans la position de contrainte, une plus grande partie de ces ailettes est alors agencée dans la gorge définie dans la paroi de l'ouverture traversante 11 entraînant un verrouillage de l'assemblage du support 2 amovible avec l'élément de cicatrisation 10, voire avec l'ensemble de cicatrisation formé par l'implant 60 et l'élément de cicatrisation 10. Dans ce contexte, seul le retrait de cet élément de verrouillage 20a du trou traversant 19 et de l'ouverture traversante 11 permet d'autoriser ainsi un désengagement partiel des ailettes de ladite gorge. On notera que l'élément de verrouillage 20a est inséré dans le trou traversant 19 jusqu'à ce que sa deuxième extrémité qui traverse également l'ouverture traversante 11 de l'élément de cicatrisation 10 est agencée dans un logement défini dans la tête de vis 41 de la vis 40 reliant mécaniquement l'élément de cicatrisation 10 à l'implant 60. Ainsi lors d'un tel agencement de l'élément de verrouillage 20a dans l'ensemble de restauration dentaire 1, le corps de cet élément de verrouillage 20a est alors compris entre les ailettes flexibles qui sont maintenues dans la position de contrainte. On notera que lorsque cet élément de verrouillage 20a correspond à la vis illustrée sur les figures 1H, 30C, 30D, 30K à 30M, sa première extrémité est comprise dans le trou traversant 19 et sa deuxième extrémité est localisée dans l'ouverture traversante 11 de l'élément de cicatrisation 10, en particulier dans le logement défini dans la tête de vis 41 de la vis 40 reliant mécaniquement l'élément de cicatrisation 10 à l'implant 60. On notera que, le trou traversant 19 comprend une portée conique qui est destinée à coopérer avec une portée conique de la tête de vis de forme complémentaire de manière à former une interface étanche. La portée conique et la tête de vis ont donc une fonction de cône d'étanchéité.

En référence à la figure 30K, on notera qu'un agencement de la tête de vis de la vis formant cet élément de verrouillage 20a, au niveau de la partie non-taraudée 52c de la paroi du trou traversant 19 de la deuxième variante du support 2 amovible correspond à un assemblage de la vis dénommé « imperdable » qui permet d'éviter de dissocier par erreur le support 2 amovible de la vis qui lui est associée, par exemple cet assemblage permet d'éviter de faire tomber la vis en manipulant ce support 2 amovible.

Plus généralement, l'élément de fixation 8 de la partie de liaison 5, peut donc prendre différentes formes, notamment peut comprendre des ailettes flexibles. Ces ailettes sont espacées l'une de l'autre d'un écart résultant d'un évidemment de matière. De telles ailettes sont susceptibles de passer élastiquement d'une position de repos à une position de contrainte lorsqu'elles sont déplacées sensiblement radialement. Ces ailettes présentent chacune une forme qui est complémentaire à la zone de liaison 6 dans l'élément de cicatrisation 10 avec laquelle elles sont susceptibles de coopérer afin de réaliser une fixation par clippage. En variante, tout autre dispositif de liaison mécanique est envisageable.

On note que dans toutes ces variantes de réalisation, le support 2 amovible comprend un axe longitudinal A1 qui s'étend sur toute sa longueur et qui est confondu avec des axes de révolution A2, A3, A4 des première et deuxième composantes 7a, 7b de la partie de réception 4 et de la partie de liaison 5. Cet axe A1 du support 2 amovible est également confondu avec l'axe L de l'implant 60 et l'axe 18 de l'élément de cicatrisation 10.

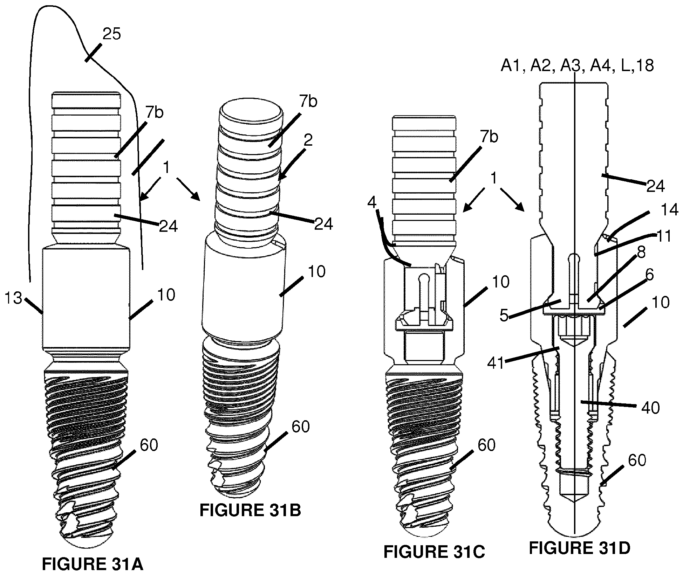

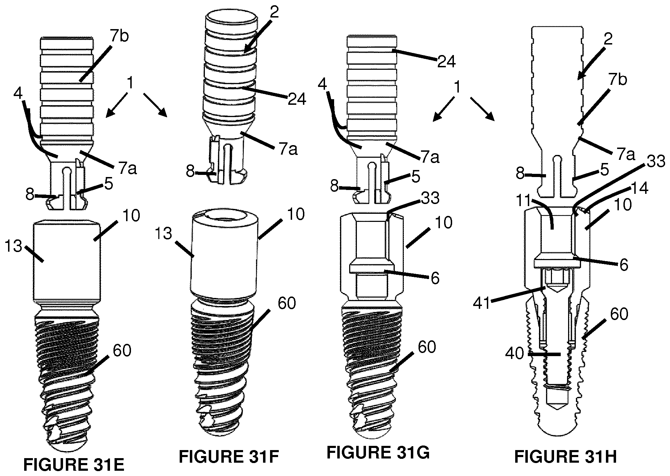

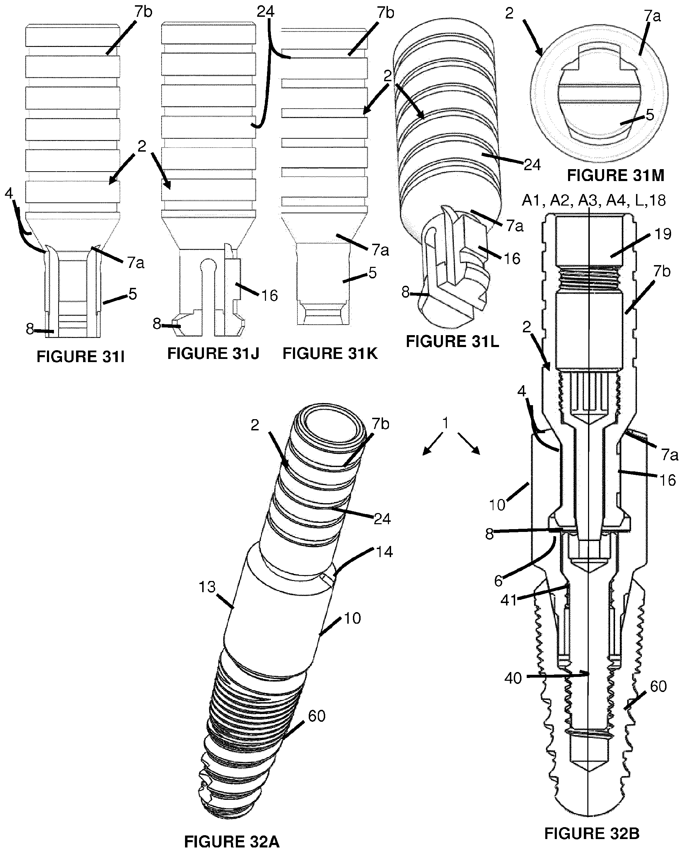

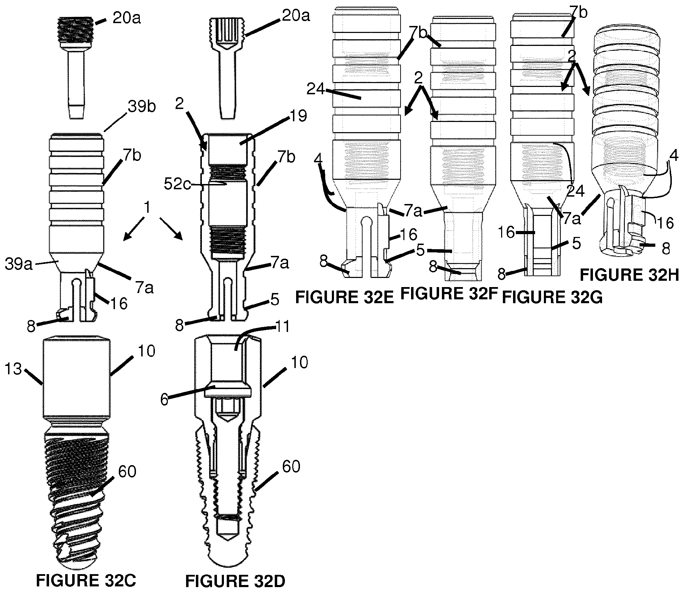

Comme cela a été vu précédemment, l'élément de cicatrisation peut comprendre une surface 13 de cicatrisation de forme cylindrique. Ainsi, les figures 31A à 31M représentent une telle réalisation à surface latérale 13 de cicatrisation cylindrique selon une variante qui correspond à celle décrite en référence aux figures 29A à 29M. De même, les figures 32A à 32H représentent une variante correspondant à celle des figures 30A à 30H mais avec une surface de cicatrisation cylindrique.

Dans ces modes de réalisation, le support 2 peut être fabriqué en matériau plastique, compatible avec une utilisation médicale. En particulier, ce support 2 peut être fabriqué à partir d'un matériau polymère, notamment à partir d'un matériau tel que le « PEEK », le « PMMA » ou encore le « POM » pour faciliter les retouches et le collage de la prothèse sommitale 25 sur la partie de réception 4. En variante, il peut être en métal, par exemple en titane, ou peut être en zircone ou en céramique. Le support 2 amovible peut être fabriqué par usinage et/ou par moulage et/ou par addition de matière, autrement dit par impression 3D.

Ainsi, l'invention offre la possibilité de réaliser une prothèse sommitale temporaire dans une cavité buccale d'un patient le temps de la réalisation d'une restauration dentaire comprenant un implant et notamment le temps de la cicatrisation lié à la mise en oeuvre d'une telle restauration. En variante, cette prothèse pourrait être une prothèse définitive.

Comme cela a été décrit, le support 2 de prothèse 25 est avantageusement monté de manière amovible sur l'élément de cicatrisation 10, à partir d'un mécanisme de fixation par vissage ou clippage assez simple à mettre en oeuvre, permettant de faciliter toutes les opérations relatives à la réalisation de prothèses sommitales temporaires et/ou définitives. Ainsi, le support 2 peut être facilement enlevé de la cavité buccale du patient afin que des opérations de retouche ou encore de polissage de la prothèse sommitale et/ou de ce support 2 puissent être réalisées ou encore pour la réalisation d'autres opérations relatives à la réalisation de prothèses sommitales définitives comme la prise d'empreinte. En remarque, ce caractère amovible permet le seul retrait du support, l'élément de cicatrisation restant bien en bouche, fixé sur un implant. La liaison entre le support et l'élément de cicatrisation peut être différente. Toutefois, l'élément de cicatrisation comprend de préférence une partie de liaison femelle (notamment au sein de son ouverture 11), et le support une partie de liaison mâle correspondante. En effet, une partie de liaison mâle sur l'élément de cicatrisation formerait une surface terminale peu adaptée pour rester seule en bouche. En remarque complémentaire, il apparait naturellement dans tous ces modes de réalisation que le support est distinct de l'élément de cicatrisation. De plus, il est apte à une fixation directe sur cet élément de cicatrisation.

En complément, un tel support 2 ainsi qu'une prothèse sommitale 25 supportée, en étant agencé dans une mâchoire d'un patient, contribue à maintenir les dents adjacentes en position en agissant comme un étai entre ces dents, afin d'éviter qu'elles ne convergent, particulièrement durant la phase d'ostéointégration de l'implant. En remarque, dans le cas de fixation du support par un élément de verrouillage 20a comme une vis, la prothèse 25, 25' présente avantageusement une ouverture pour l'accès à cet élément de verrouillage.

Avantageusement un tel support 2 amovible permet d'éviter tout endommagement de la surface émergente de l'élément de cicatrisation et ce, tout en permettant la réalisation d'une prothèse sommitale. C'est particulièrement avantageux en ce que cela autorise la mise en oeuvre de la dernière phase de restauration dentaire comprenant une étape d'identification automatique de la géométrie des pièces de restauration à former par l'intermédiaire de la forme de la surface émergente de l'élément de cicatrisation.

L'invention ne se limite pas aux modes de réalisation décrits, et comprend par exemple des combinaisons de composants des modes de réalisation décrits précédemment. Notamment, l'ensemble de restauration dentaire peut être monobloc, depuis la connectique avec un implant jusqu'à la prothèse 25, ou en plusieurs éléments distincts, comme évoqué précédemment. Ainsi, l'élément de cicatrisation 10 peut intégrer ou non la connectique pour une liaison directe sur un implant, et peut comprendre ou non la zone de liaison avec une prothèse 25, voire la prothèse 25 elle-même. Ainsi, dans tous les cas, de manière généralisée, l'élément de cicatrisation comprend une partie supérieure de liaison avec une prothèse sommitale et une partie de prise d'empreinte.

L'invention porte aussi sur un système de restauration, qui met en oeuvre le procédé de restauration mentionné précédemment. Il comprend un élément de cicatrisation tel que décrit précédemment, un élément de prise d'empreinte numérique, notamment un scanner, et au moins un calculateur qui exploite les images provenant de la prise d'empreinte numérique pour une reconnaissance automatique, sur la base de la forme anatomique de l'ensemble de cicatrisation et/ou par la reconnaissance d'au moins un marqueur, du type d'élément de cicatrisation utilisé, ce système utilisant l'élément de cicatrisation dans sa deuxième configuration dans laquelle sa partie émergente est visible dans l'espace buccal, non recouverte. Ce système utilise en effet l'élément de cicatrisation dans une deuxième configuration dans laquelle une éventuelle prothèse montée sur un support amovible est retirée : l'espace buccal avec le seul élément de cicatrisation est numérisé.

## Revendications

1. Ensemble de restauration dentaire (1), comprenant un élément de cicatrisation (10) et un support (2) de prothèse (25), ce support (2) étant fixé de manière amovible à l'élément de cicatrisation (10), l'élément de cicatrisation (10) étant apte à une connexion directe ou indirecte sur un implant dentaire (60), comprenant une surface latérale (13) destinée à une intégration au moins partielle au sein d'une gencive pour mettre en forme la gencive lors de sa cicatrisation, ledit élément de cicatrisation (10) comprenant une zone de liaison (6) définie dans une ouverture traversante (11), apte à recevoir la fixation amovible du support (2) d'une prothèse sommitale (25) et optionnellement apte à recevoir la fixation amovible d'un élément de prise d'empreinte (42), et comprenant une surface terminale (14) formant avec une partie de la surface latérale (13) une surface émergente, destinée à rester hors de la gencive, qui est asymétrique par rapport à au moins un plan médian perpendiculaire pour présenter une forme anatomique et reconnaissable pour former la partie de prise d'empreinte numérique, et le support (2) de prothèse comprenant une partie de réception (4) d'une prothèse sommitale (25) et une partie de liaison (5), configurée pour coopérer avec la zone de liaison (6) de l'élément de cicatrisation (10), ladite partie de liaison (5) du support (2) et la zone de liaison (6) de l'élément de cicatrisation (10) comprenant :
- Un organe de clippage mâle de ladite partie de liaison (5) coopérant avec une gorge/rainure définie dans une paroi de l'ouverture traversante (11) de l'élément de cicatrisation, pour réaliser la fixation par clippage entre le support (2) et l'élément de cicatrisation (10), ou
- Une partie filetée de ladite partie de liaison (5) coopérant avec une partie taraudée définie dans une paroi de l'ouverture traversante (11) de l'élément de cicatrisation pour la liaison mécanique entre le support (2) et l'élément de cicatrisation (10).

2. Ensemble de restauration dentaire (1), comprenant un élément de cicatrisation (10) et un support (2) de prothèse (25), ce support (2) étant fixé de manière amovible à l'élément de cicatrisation (10), l'élément de cicatrisation (10) étant apte à une connexion directe ou indirecte sur un implant dentaire (60), comprenant une surface latérale (13) cylindrique et au moins un marqueur informatif formant une partie de prise d'empreinte numérique permettant l'identification d'au moins une caractéristique de l'élément de cicatrisation (10) et/ou indirectement d'une embase de pilier (51) et/ou d'un implant dentaire (60) lors d'une étape de prise d'empreinte numérique, et en ce que ledit élément de cicatrisation (10) comprend une zone de liaison (6) définie dans une ouverture traversante (11), apte à recevoir la fixation amovible du support (2) d'une prothèse sommitale (25) et optionnellement apte à recevoir la fixation amovible d'un élément de prise d'empreinte (42), et le support (2) de prothèse comprenant une partie de réception (4) d'une prothèse sommitale (25) et une partie de liaison (5), configurée pour coopérer avec la zone de liaison (6) de l'élément de cicatrisation (10), ladite partie de liaison (5) du support (2) et la zone de liaison (6) de l'élément de cicatrisation (10) comprenant :
- Un organe de clippage mâle de ladite partie de liaison (5) coopérant avec une gorge/rainure définie dans une paroi de l'ouverture traversante (11) de l'élément de cicatrisation, pour réaliser la fixation par clippage entre le support (2) et l'élément de cicatrisation (10), ou
- Une partie filetée de ladite partie de liaison (5) coopérant avec une partie taraudée définie dans une paroi de l'ouverture traversante (11) de l'élément de cicatrisation pour la liaison mécanique entre le support (2) et l'élément de cicatrisation (10).

3. Ensemble de restauration dentaire (1) selon la revendication 1 ou 2, **caractérisé en ce que** l'élément de cicatrisation est conçu pour occuper une première configuration dans laquelle il est lié à un support (2) distinct et amovible d'une prothèse, et une deuxième configuration dans laquelle il est fixé seul à un implant par une vis (40), non recouvert par un support (2).

4. Ensemble de restauration dentaire selon l'une des revendications précédentes, **caractérisé en ce que** des parties de la surface émergente de l'élément de cicatrisation (10) destinées respectivement à un positionnement orienté vers l'intérieur et vers l'extérieur de la bouche présentent une forme différente.

5. Ensemble de restauration dentaire selon la revendication 1 ou l'une quelconque des revendications 3 à 4 dans leur dépendance envers la revendication 1, **caractérisé en ce qu'**une section transverse de la surface latérale (13) de l'élément de cicatrisation (10) ou une projection sur un plan parallèle de la surface émergente de l'élément de cicatrisation (10) présente :
- une forme sensiblement trapézoïdale ou une forme sensiblement polygonale, ou triangulaire, ou carrée, ou rectangulaire, ou ovoïde, ou une forme sensiblement polygonale avec des angles arrondis ; et/ou
- une partie destinée à un positionnement orienté vers l'extérieur de la bouche de plus grande dimension qu'une partie destinée à un positionnement orienté vers l'intérieur.

6. Ensemble de restauration dentaire selon la revendication 1 ou l'une quelconque des revendications 3 à 5 dans leur dépendance envers la revendication 1, **caractérisé en ce que** la surface émergente de l'élément de cicatrisation présente une forme tridimensionnelle identifiable, formant une partie de prise d'empreinte numérique, permettant automatiquement sa reconnaissance, son positionnement, et/ou son orientation et indirectement le positionnement et l'orientation de l'implant, sans marqueur.

7. Ensemble de restauration dentaire selon la revendication 1 ou l'une quelconque des revendications 3 à 6 dans leur dépendance envers la revendication 1 selon l'une quelconque des revendications précédentes, **caractérisé en ce que** la surface latérale (13) est conçue sur mesure pour une cicatrisation la plus anatomique possible, et **en ce que** sa forme est unique et apte à former une partie de prise d'empreinte numérique.

8. Ensemble de restauration dentaire selon l'une des revendications précédentes, **caractérisé en ce que** l'élément de cicatrisation est monobloc, comprend à son extrémité inférieure et sur un pourtour extérieur une interface apte à coopérer avec une interface d'un implant (60) pour sa fixation directe sur un implant, ou **en ce qu'**il comprend une interface pour coopérer avec une embase de pilier (51) formant un élément intermédiaire pour une fixation indirecte sur un implant (60).

9. Ensemble de restauration dentaire selon l'une des revendications précédentes, **caractérisé en ce qu'**il comprend en outre une vis (40) de sorte que l'élément de cicatrisation est apte à occuper une deuxième configuration dans laquelle il est fixé seul à un implant par une vis (40), non recouvert par le support (2) de prothèse, et **caractérisé en ce que** dans cette deuxième configuration, la tête (41) de la vis (40) vient se noyer dans l'élément de cicatrisation et ne dépasse pas de la face terminale (14) de l'élément de cicatrisation (10).

10. Ensemble de restauration dentaire selon la revendication précédente, **caractérisé en ce que** la surface terminale (14) et/ou la surface émergente de l'élément de cicatrisation (10) présente :
- une surface non plane, courbée ; et/ou
- une surface convexe ; et/ou
- une surface sans aspérité, ou **caractérisé en ce que** la surface terminale (14) et/ou la surface émergente de l'élément de cicatrisation (10) complétée par la tête (41) de vis (40) lorsque l'élément de cicatrisation (10) est fixé seul par une vis (40), présente une surface continue, sans relief, et/ou sans partie creuse, et/ou sans gorge, et/ou sans arrête, et/ou sans aspérité et/ou convexe.

11. Ensemble de restauration dentaire selon l'une des revendications 9 ou 10, **caractérisé en ce que** ladite ouverture traversante (11) de l'élément de cicatrisation s'étend selon un axe longitudinal apte à sa fixation sur un implant par une vis de fixation (40) et **en ce que** la vis de fixation (40) présente une couleur ou une forme formant un marqueur pour indiquer un paramètre géométrique de l'élément de cicatrisation comme sa hauteur.

12. Ensemble de restauration dentaire (1) selon l'une des revendications précédentes, **caractérisé en ce qu'**il comprend une prothèse (25) fixée de manière amovible sur l'élément de cicatrisation (10).

13. Système de restauration dentaire, **caractérisé en ce qu'**il comprend un ensemble de restauration dentaire (1) selon l'une des revendications précédentes, un élément de prise d'empreinte numérique, notamment un scanner, et au moins un calculateur qui exploite les images provenant de la prise d'empreinte numérique pour une reconnaissance automatique, sur la base de la forme anatomique de l'ensemble de cicatrisation et/ou par la reconnaissance d'au moins un marqueur, du type d'élément de cicatrisation utilisé, à partir d'images de l'élément de cicatrisation (10) dans sa deuxième configuration dans laquelle sa partie émergente est visible dans l'espace buccal, non recouverte par un support.

## Patentansprüche

1. Zahnrestaurationseinheit (1), umfassend ein Einheilelement (10) und einen Träger (2) für eine Prothese (25), wobei der Träger (2) abnehmbar am Einheilelement (10) befestigt ist, wobei das Einheilelement (10) für eine direkte oder indirekte Verbindung mit einem Zahnimplantat (60) geeignet ist, mit einer Seitenfläche (13), die dazu bestimmt ist, zumindest teilweise in ein Zahnfleisch integriert zu sein, um das Zahnfleisch während seiner Heilung zu formen, wobei das Einheilelement (10) einen in einer Durchgangsöffnung (11) definierten Verbindungsbereich (6) umfasst, der die abnehmbare Befestigung des Trägers (2) einer Sommitalprothese (25) aufnehmen kann und optional die abnehmbare Befestigung eines Abdrucknahmeelements (42) aufnehmen kann, und mit einer Endfläche (14), die mit einem Teil der Seitenfläche (13) eine hervorstehende Fläche bildet, die dazu bestimmt ist, außerhalb des Zahnfleischs zu verbleiben, und die in Bezug auf mindestens eine senkrechte Mittelebene asymmetrisch ist, um eine anatomische und wiedererkennbare Form aufzuweisen, um den Teil zur digitalen Abdrucknahme zu bilden, und wobei der Prothesenträger (2) einen Teil (4) zur Aufnahme einer Sommitalprothese (25) und einen Verbindungsteil (5) umfasst, der dazu ausgelegt ist, mit dem Verbindungsbereich (6) des Einheilelements (10) zusammenzuwirken, wobei der Verbindungsteil (5) des Trägers (2) und der Verbindungsbereich (6) des Einheilelements (10) Folgendes umfassen:
- ein männliches Einrastelement des Verbindungsteils (5), das mit einer Rille/Nut zusammenwirkt, die in einer Wand der Durchgangsöffnung (11) des Einheilelements definiert ist, um die Einrastbefestigung zwischen dem Träger (2) und dem Einheilelement (10) zu bewirken, oder
- einen Außengewindeteil des Verbindungsteils (5), der mit einem in einer Wand der Durchgangsöffnung (11) des Einheilelements definierten Innengewindeteil zusammenwirkt, zur mechanischen Verbindung zwischen dem Träger (2) und dem Einheilelement (10).

2. Zahnrestaurationseinheit (1), umfassend ein Einheilelement (10) und einen Träger (2) für eine Prothese (25), wobei der Träger (2) abnehmbar am Einheilelement (10) befestigt ist, wobei das Einheilelement (10) für eine direkte oder indirekte Verbindung mit einem Zahnimplantat (60) geeignet ist und eine zylindrische Seitenfläche (13) und mindestens einem informativen Marker umfasst, der einen Teil zur digitalen Abdrucknahme bildet, der die Identifizierung mindestens eines Merkmals des Einheilelements (10) und/oder indirekt einer Abutmentbasis (51) und/oder eines Zahnimplantats (60) bei einem Schritt einer digitalen Abdrucknahme ermöglicht, und wobei das Einheilelement (10) einen in einer Durchgangsöffnung (11) definierten Verbindungsbereich (6) umfasst, der die abnehmbare Befestigung des Trägers (2) einer Sommitalprothese (25) aufnehmen kann und optional die abnehmbare Befestigung eines Abdrucknahmeelements (42) aufnehmen kann, und wobei der Träger (2) der Prothese einen Teil (4) zur Aufnahme einer Sommitalprothese (25) und einen Verbindungsteil (5) umfasst, der dazu ausgelegt ist, mit dem Verbindungsbereich (6) des Einheilelements (10) zusammenzuwirken, wobei der Verbindungsteil (5) des Trägers (2) und der Verbindungsbereich (6) des Einheilelements (10) Folgendes umfassen:
- ein männliches Einrastelement des Verbindungsteils (5), das mit einer Rille/Nut zusammenwirkt, die in einer Wand der Durchgangsöffnung (11) des Einheilelements definiert ist, um die Einrastbefestigung zwischen dem Träger (2) und dem Einheilelement (10) zu bewirken, oder
- einen Außengewindeteil des Verbindungsteils (5), der mit einem in einer Wand der Durchgangsöffnung (11) des Einheilelements definierten Innengewindeteil zusammenwirkt, zur mechanischen Verbindung zwischen dem Träger (2) und dem Einheilelement (10).

3. Zahnrestaurationseinheit (1) nach Anspruch 1 oder 2, **dadurch gekennzeichnet, dass** das Einheilelement so gestaltet ist, dass es eine erste Konfiguration, in der es mit einem separaten und abnehmbaren Träger (2) einer Prothese verbunden ist, und eine zweite Konfiguration, in der es allein durch eine Schraube (40) an einem Implantat befestigt und nicht durch einen Träger (2) bedeckt ist, einnimmt.

4. Zahnrestaurationseinheit nach einem der vorangehenden Ansprüche, **dadurch gekennzeichnet, dass** die Teile der hervorstehenden Fläche des Einheilelements (10), die für eine im Mund nach innen bzw. nach außen gerichtete Positionierung bestimmt sind, eine unterschiedliche Form aufweisen.

5. Zahnrestaurationseinheit nach Anspruch 1 oder einem der Ansprüche 3 bis 4 in ihrer Abhängigkeit von Anspruch 1, **dadurch gekennzeichnet, dass** ein Querschnitt der Seitenfläche (13) des Einheilelements (10) oder eine Projektion der hervorstehenden Fläche des Einheilelements (10) auf eine Parallelebene Folgendes aufweist:
- eine im Wesentlichen trapezförmige Form oder eine im Wesentlichen polygonale oder dreieckige oder quadratische oder rechteckige oder eiförmige Form oder eine im Wesentlichen polygonale Form mit abgerundeten Ecken und/oder
- einen für eine im Mund nach außen gerichtete Positionierung bestimmten Teil, der größer ist als ein für eine nach innen gerichtete Positionierung bestimmter Teil.

6. Zahnrestaurationseinheit nach Anspruch 1 oder einem der Ansprüche 3 bis 5 in ihrer Abhängigkeit von Anspruch 1, **dadurch gekennzeichnet, dass** die hervorstehende Fläche des Einheilelements eine identifizierbare dreidimensionale Form aufweist, die einen Teil zur digitalen Abdrucknahme bildet, der automatisch seine Wiedererkennung, seine Positionierung und/oder seine Ausrichtung und indirekt die Positionierung und die Ausrichtung des Implantats ohne Marker ermöglicht.

7. Zahnrestaurationseinheit nach Anspruch 1 oder einem der Ansprüche 3 bis 6 in ihrer Abhängigkeit von Anspruch 1 nach einem der vorangehenden Ansprüche, **dadurch gekennzeichnet, dass** die Seitenfläche (13) für eine möglichst anatomische Einheilung maßgefertigt wird und dass ihre Form einzigartig und dazu geeignet ist, einen Teil zur digitalen Abdrucknahme zu bilden.

8. Zahnrestaurationseinheit nach einem der vorangehenden Ansprüche, **dadurch gekennzeichnet, dass** das Einheilelement einstückig ist, an einem unteren Ende und an seinem Außenumfang eine Schnittstelle umfasst, die dazu geeignet ist, für seine direkte Befestigung an einem Implantat mit einer Schnittstelle eines Implantats (60) zusammenzuwirken, oder dass es eine Schnittstelle umfasst, um mit einer Abutmentbasis (51) zusammenzuwirken, die ein Zwischenelement für eine indirekte Befestigung an einem Implantat (60) bildet.

9. Zahnrestaurationseinheit nach einem der vorangehenden Ansprüche, **dadurch gekennzeichnet, dass** sie ferner eine Schraube (40) umfasst, sodass das Einheilelement eine zweite Konfiguration einnehmen kann, in dem es allein durch eine Schraube (40) an einem Implantat befestigt und nicht durch den Prothesenträger (2) bedeckt ist, **dadurch gekennzeichnet, dass** in dieser zweiten Konfiguration der Kopf (41) der Schraube (40) in das Einheilelement eintaucht und nicht über die Endfläche (14) des Einheilelements (10) hinausragt.

10. Zahnrestaurationseinheit nach dem vorangehenden Anspruch, **dadurch gekennzeichnet, dass** die Endfläche (14) und/oder die hervorstehende Fläche des Einheilelements (10) Folgendes aufweisen:
- eine nichtebene, gekrümmte Oberfläche und/oder
- eine konvexe Oberfläche und/oder
- eine Oberfläche ohne Unebenheiten, oder **dadurch gekennzeichnet ist, dass** die Endfläche (14) und/oder die hervorstehende Fläche des Einheilelements (10), die durch den Kopf (41) der Schraube (40) ergänzt wird, wenn das Einheilelement (10) allein durch eine Schraube (40) befestigt ist, eine durchgehende Oberfläche ohne Relief und/oder hohle Abschnitte und/oder ohne Rillen und/oder ohne Kanten und/oder ohne Unebenheiten und/oder eine konvexe Oberfläche aufweist.

11. Zahnrestaurationseinheit nach einem der Ansprüche 9 oder 10, **dadurch gekennzeichnet, dass** sich die Durchgangsöffnung (11) des Einheilelements entlang einer Längsachse erstreckt, die für seine Befestigung an einem Implantat anhand einer Befestigungsschraube (40) geeignet ist, und dass die Befestigungsschraube (40) eine Farbe oder eine Form aufweist, die einen Marker bildet, um einen geometrischen Parameter des Einheilelements, wie etwa seine Höhe, anzuzeigen.

12. Zahnrestaurationseinheit (1) nach einem der vorangehenden Ansprüche, **dadurch gekennzeichnet, dass** sie eine Prothese (25) umfasst, die abnehmbar am Einheilelement (10) befestigt ist.

13. Zahnrestaurationssystem, **dadurch gekennzeichnet, dass** es eine Zahnrestaurationseinheit (1) nach einem der vorangehenden Ansprüche, ein Element zur digitalen Abdrucknahme, insbesondere einen Scanner, und mindestens einen Rechner umfasst, der die Bilder aus der digitalen Abdrucknahme auswertet, um auf der Grundlage der anatomischen Form der Einheilungseinheit und/oder durch Erkennung mindestens eines Markers den Typ des verwendeten Einheilelements anhand von Bildern des Einheilelements (10) in seiner zweiten Konfiguration, in der sein hervorstehender Teil im Mundraum sichtbar und nicht durch einen Träger bedeckt ist, zu erkennen.

## Claims

1. Dental restoration assembly (1), comprising a healing element (10) and a support (2) for a prosthesis (25), this support (2) being attached removably to the healing element (10), the healing element (10) being able to be connected directly or indirectly to a dental implant (60) and comprising a lateral surface (13) intended for at least partial integration within a gum in order to shape the gum as the latter heals, said healing element (10) comprising a connection zone (6) defined in a through-opening (11) and able to receive the removable attachment of the support (2) of a crown prosthesis (25) and optionally able to receive the removable attachment of an impression-taking element (42), and comprising an end surface (14) which, together with part of the lateral surface (13), forms an emergent surface which is intended to remain outside the gum and is asymmetrical with respect to at least one perpendicular median plane in order to present an anatomical and recognizable shape for forming the part for taking a digital impression, and the prosthesis support (2) comprising a receiving part (4) for a crown prosthesis (25) and a connection part (5) configured to cooperate with the connection zone (6) of the healing element (10), said connection part (5) of the support (2) and the connection zone (6) of the healing element (10) comprising:
- a male clipping component of said connection part (5) cooperating with a recess/groove defined in a wall of the through-opening (11) of the healing element, for the purpose of attachment by clipping between the support (2) and the healing element (10), or
- a threaded part of said connection part (5) cooperating with an internally threaded part defined in a wall of the through-opening (11) of the healing element for the purpose of mechanical connection between the support (2) and the healing element (10).

2. Dental restoration assembly (1), comprising a healing element (10) and a support (2) for a prosthesis (25), this support (2) being attached removably to the healing element (10), the healing element (10) being able to be connected directly or indirectly to a dental implant (60) and comprising a cylindrical lateral surface (13) and at least one information marker forming a part for taking a digital impression and permitting the identification of at least one characteristic of the healing element (10) and/or indirectly of an abutment base (51) and/or of a dental implant (60) during a step of taking a digital impression, and in that said healing element (10) comprises a connection zone (6) defined in a through-opening (11) and able to receive the removable attachment of the support (2) of a crown prosthesis (25) and optionally able to receive the removable attachment of an impression-taking element (42), and the prosthesis support (2) comprising a receiving part (4) for a crown prosthesis (25) and a connection part (5) configured to cooperate with the connection zone (6) of the healing element (10), said connection part (5) of the support (2) and the connection zone (6) of the healing element (10) comprising:
- a male clipping component of said connection part (5) cooperating with a recess/groove defined in a wall of the through-opening (11) of the healing element, for the purpose of attachment by clipping between the support (2) and the healing element (10), or
- a threaded part of said connection part (5) cooperating with an internally threaded part defined in a wall of the through-opening (11) of the healing element, for the purpose of mechanical connection between the support (2) and the healing element (10).

3. Dental restoration assembly (1) according to Claim 1 or 2, **characterized in that** the healing element is designed to occupy a first configuration, in which it is connected to a separate and removable prosthesis support (2), and a second configuration, in which it is fixed on its own to an implant by a screw (40) and not covered by a support (2).

4. Dental restoration assembly according to one of the preceding claims, **characterized in that** parts of the emergent surface of the healing element (10) that are respectively intended for a positioning oriented towards the inside and towards the outside of the mouth have a different shape.

5. Dental restoration assembly according to Claim 1 or either of Claims 3 and 4 in their dependence on Claim 1, **characterized in that** a transverse section of the lateral surface (13) of the healing element (10) or a projection on a parallel plane of the emergent surface of the healing element (10) presents:
- a substantially trapezoidal shape or a substantially polygonal or triangular or square or rectangular or ovoid shape, or a substantially polygonal shape with rounded corners; and or
- a part intended for a positioning oriented towards the outside of the mouth and larger than a part intended for a positioning oriented towards the inside of the mouth.

6. Dental restoration assembly according to Claim 1 or any one of Claims 3 to 5 in their dependence on Claim 1, **characterized in that** the emergent surface of the healing element has an identifiable three-dimensional shape forming a part for taking a digital impression, automatically permitting its recognition, its positioning and/or its orientation and, indirectly, the positioning and orientation of the implant, without a marker.

7. Dental restoration assembly according to Claim 1 or any one of Claims 3 to 6 in their dependence on Claim 1 according to any one of the preceding claims, **characterized in that** the lateral surface (13) is custom-designed for healing that is as anatomical as possible, and **in that** its shape is unique and able to form a part for taking a digital impression.

8. Dental restoration assembly according to one of the preceding claims, **characterized in that** the healing element is in one piece and comprises at its lower end, and on an outer periphery, an interface able to cooperate with an interface of an implant (60), for its direct attachment to an implant, or **in that** it comprises an interface for cooperating with an abutment base (51) forming an intermediate element for indirect attachment to an implant (60).

9. Dental restoration assembly according to one of the preceding claims, **characterized in that** it additionally comprises a screw (40), such that the healing element is able to occupy a second configuration, in which it is attached on its own to an implant by a screw (40) and not covered by the prosthesis support (2), and **characterized in that** in this second configuration the head (41) of the screw (40) is recessed in the healing element and does not protrude from the end face (14) of the healing element (10).

10. Dental restoration assembly according to the preceding claim, **characterized in that** the end surface (14) and/or the emergent surface of the healing element (10) has:
- a non-flat, curved surface; and/or
- a convex surface; and/or
- a surface without roughness, or **characterized in that** the end surface (14) and/or the emergent surface of the healing element (10) completed by the head (41) of screw (40), when the healing element (10) is attached on its own by a screw (40), has a continuous surface, without relief, and/or without a hollow part, and/or without a groove, and/or without a ridge, and/or without roughness, and/or is convex.

11. Dental restoration assembly according to either of Claims 9 and 10, **characterized in that** said through-opening (11) of the healing element extends along a longitudinal axis suitable for its attachment to an implant by an attachment screw (40), and **in that** the attachment screw (40) has a colour or a shape forming a marker for indicating a geometric parameter of the healing element, such as its height.

12. Dental restoration assembly (1) according to one of the preceding claims, **characterized in that** it comprises a prosthesis (25) attached removably to the healing element (10).

13. Dental restoration system, **characterized in that** it comprises a dental restoration assembly (1) according to one of the preceding claims, an element for taking a digital impression, in particular a scanner, and at least one calculator which exploits the images from the digital impression-taking for the purpose of automatic recognition, based on the anatomical shape of the healing assembly and/or by recognition of at least one marker, of the type of healing element used, from images of the healing element (10) in its second configuration, in which its emergent part is visible in the oral space and not covered by a support.
